(19) Europäisches Patentamt
European Patent Office
Office européen des brevets

(11) **EP 2 917 716 B1**

(12) **FASCICULE DE BREVET EUROPEEN**

(45) Date de publication et mention
de la délivrance du brevet:
**19.05.2021 Bulletin 2021/20**

(51) Int Cl.:
***G01N 15/08*** (2006.01)

(21) Numéro de dépôt: **13786281.9**

(86) Numéro de dépôt international:
**PCT/EP2013/073162**

(22) Date de dépôt: **06.11.2013**

(87) Numéro de publication internationale:
**WO 2014/072339 (15.05.2014 Gazette 2014/20)**

(54) **DISPOSITIF ET PROCEDE D'ESTIMATION D'UN FLUX DE GAZ DANS UNE ENCEINTE MAINTENUE EN DEPRESSION VIS-A-VIS DU GAZ**

VORRICHTUNG UND VERFAHREN ZUR SCHÄTZUNG EINER GASSTRÖMUNG IN EINEM GEHÄUSE UNTER VERMINDERTEM DRUCK IN BEZUG AUF DAS GAS

DEVICE AND METHOD FOR ESTIMATING A FLOW OF GAS IN AN ENCLOSURE MAINTAINED AT REDUCED PRESSURE IN RELATION TO THE GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2012 FR 1260532**

(43) Date de publication de la demande:
**16.09.2015 Bulletin 2015/38**

(73) Titulaire: **Commissariat à l'Énergie Atomique et aux Énergies Alternatives 75015 Paris (FR)**

(72) Inventeurs:
 • **LEROY, Arnaud**
   **F-57660 VAHL-EBERSING (FR)**
 • **CROS, Stéphane**
   **F-73000 Chambéry (FR)**

(74) Mandataire: **Brevalex**
   **95, rue d'Amsterdam**
   **75378 Paris Cedex 8 (FR)**

(56) Documents cités:
   FR-A1- 2 959 314    US-B1- 6 335 202
   US-B2- 7 624 621    US-B2- 7 624 621

• MCBREEN J ET AL: "Method for determination of permeation rate of hydrogen through metal membranes", JOURNAL OF THE ELECTROCHEMICAL SOCIETY, ELECTROCHEMICAL SOCIETY, MANCHESTER, NEW HAMPSHIRE; US , vol. 113, no. 11 1 janvier 1991 (1991-01-01), pages 1218-1222, XP008165264, ISSN: 0013-4651, DOI: 10.1149/1.3087209 Extrait de l'Internet: URL:http://jes.ecsdl.org/content/113/11/12 18.full.pdf+html [extrait le 2013-10-11]
• Ash: "Transport through a slab membrane governed by a concentration-dependent diffusion coefficient. III. Numerical solution of the diffusion equation: 'early-time' and '[square root of]t' procedures", journal of membrane science, 1 janvier 2000 (2000-01-01), pages 133-146, XP055082973, Extrait de l'Internet: URL:http://ac.els-cdn.com/S037673880000530 5/1-s2.0-S0376738800005305-main.pdf?_tid=4 18fc5d4-3007-11e3-888c-00000aab0f26&acdnat =1381229527_74b03aa1fee7b76bbde3d72f9b129 a 8f [extrait le 2013-10-08]
• MCBREEN J ET AL: "Method for determination of permeation rate of hydrogen through metal membranes", JOURNAL OF THE ELECTROCHEMICAL SOCIETY, , vol. 113, no. 11 1 January 1991 (1991-01-01), pages 1218-1222, XP008165264, ISSN: 0013-4651, DOI: 10.1149/1.3087209 Retrieved from the Internet: URL:http://jes.ecsdl.org/content/113/11/12 18.full.pdf+html

- Ash: "Transport through a slab membrane governed by a concentration-dependent diffusion coefficient. III. Numerical solution of the diffusion equation: 'early-time' and '[square root of]t' procedures", journal of membrane science, 1 January 2000 (2000-01-01), pages 133-146, XP055082973, DOI: 10.1016/S0376-7388(00)00530-5 Retrieved from the Internet: URL:http://ac.els-cdn.com/S037673880000530 5/1-s2.0-S0376738800005305-main.pdf?_tid=4 18fc5d4-3007-11e3-888c-00000aab0f26&acdnat =1381229527_74b03aa1fee7b76bbde3d72f9b129 a 8f [retrieved on 2013-10-08]

**Description**

**DOMAINE TECHNIQUE**

L'invention concerne un dispositif et un procédé d'estimation d'au moins un flux de gaz dans une enceinte maintenue dans un régime de dépression vis-à-vis du ou des gaz. L'invention s'applique notamment pour réaliser une estimation de la perméation, c'est-à-dire des propriétés barrières aux gaz, d'une couche barrière, ou film barrière.

**ÉTAT DE LA TECHNIQUE ANTÉRIEURE**

Certains dispositifs, tels que les composants électroniques et les panneaux photovoltaïques à base de matériaux organiques, sont particulièrement sensibles à l'oxydation induite par l'eau et le dioxygène. Afin de pouvoir augmenter la durée de vie de ces dispositifs, il est nécessaire de les protéger au maximum en utilisant des films barrières, ou couches barrières, ayant de fortes propriétés barrières à la vapeur d'eau et au dioxygène, par exemple comprises entre environ $10^{-3}$ g.m$^{-2}$.jours$^{-1}$ et $10^{-6}$ g.m$^{-2}$.jours$^{-1}$ pour le flux de transmission à l'eau (ou WVTR pour « Water Vapor Transmission Rate ») et de l'ordre de $10^{-3}$ cm$^3$.m$^{-2}$.jours$^{-1}$ pour le flux de transmission à l'oxygène ou dioxygène (ou OTR pour « Oxygen Transmission Rate »). De tels films barrières sont par exemple le « Ultra Barrier Solar Film » commercialisé par la société 3M™, ou le film X-Barrier™ commercialisé par la société Mitsubishi Plastics™.

Le terme « barrière » signifie ici la protection apportée par le matériau barrière au dispositif par rapport aux gaz de l'environnement responsables de la dégradation du dispositif. La protection de ces dispositifs sensibles à l'atmosphère est d'autant plus critique lorsqu'elle doit être effectuée avec des matériaux flexibles, à fortiori transparents. Les propriétés barrières au gaz de ces couches de matériaux (ou films barrières) peuvent être très variables. Les couches barrières classiques, adaptées à des applications peu exigeantes (par exemple dans le domaine alimentaire), ont des WVTR compris entre environ $10^{-1}$ et 1 g.m$^{-2}$.jours$^{-1}$. Les couches formant les plus fortes barrières au passage de la vapeur d'eau ont des WVTR inférieurs à environ $10^{-6}$ g.m$^{-2}$.jours$^{-1}$. Les couches barrières ne permettent donc pas d'empêcher totalement le passage des gaz et présentent toujours une perméation non nulle vis-à-vis des gaz. Il est donc important de pouvoir mesurer leur niveau de perméation afin de garantir la protection des dispositifs protégés avec de tels films barrières.

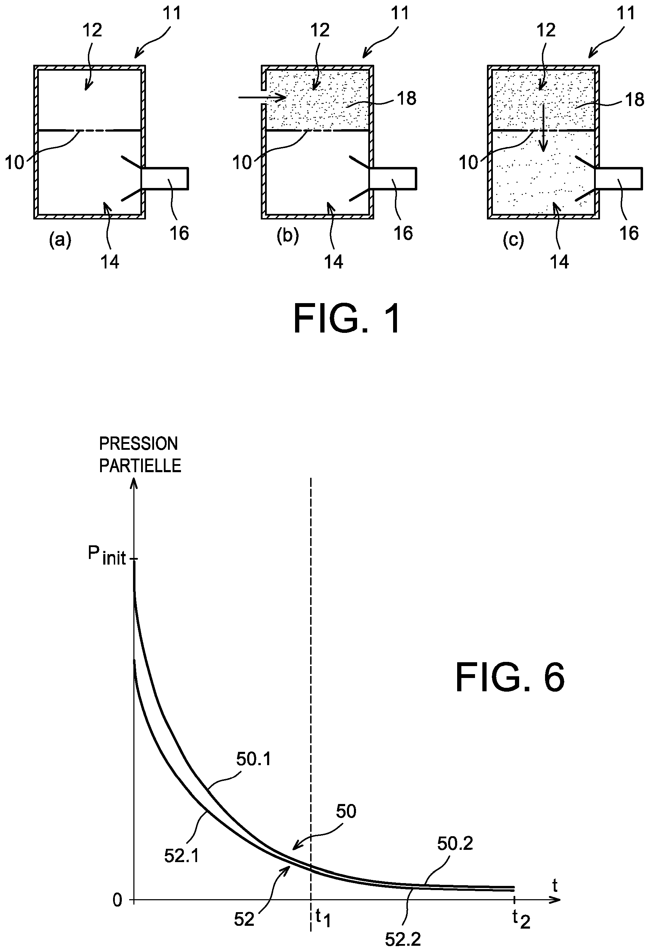

Les propriétés barrières de ces couches barrières sont mesurées via la mise en œuvre d'une mesure de perméation des couches telle que représentée schématiquement sur la figure 1, permettant de déterminer le flux de gaz transmis par la couche barrière. Une couche barrière 10 à caractériser est placée dans un perméamètre 11, à l'interface entre une première chambre 12 et une deuxième chambre 14 (voir figure 1, schéma a)). Un dispositif de mesure 16 permettant de réaliser une détection de gaz présents dans la deuxième chambre 14, en mesurant notamment la pression partielle de certains isotopes du gaz tel que la vapeur d'eau ou l'oxygène, est disposé dans la deuxième chambre 14. Ce dispositif de mesure 16 correspond par exemple à un spectromètre de masse. La seule paroi perméable entre les deux chambres 12 et 14 est donc formée par la couche barrière 10 dont on cherche à caractériser la perméation. La première chambre 12 est remplie d'un gaz cible 18 à une pression contrôlée, ce gaz 18 étant apte à être détecté par le dispositif de mesure 16. Le gaz cible 18 est par exemple de la vapeur d'eau ou de l'oxygène ou du dioxygène, mais le principe est valable pour tout autre gaz ou arôme (voir figure 1, schéma b)). Le gaz 18 présent dans la première chambre 12 est alors transmis dans la deuxième chambre 14 par un processus de solubilité/diffusion à travers la couche barrière 10 (figure 1, schéma c)). Un tel perméamètre 11 est par exemple décrit dans le brevet US 7,624,621 B2.

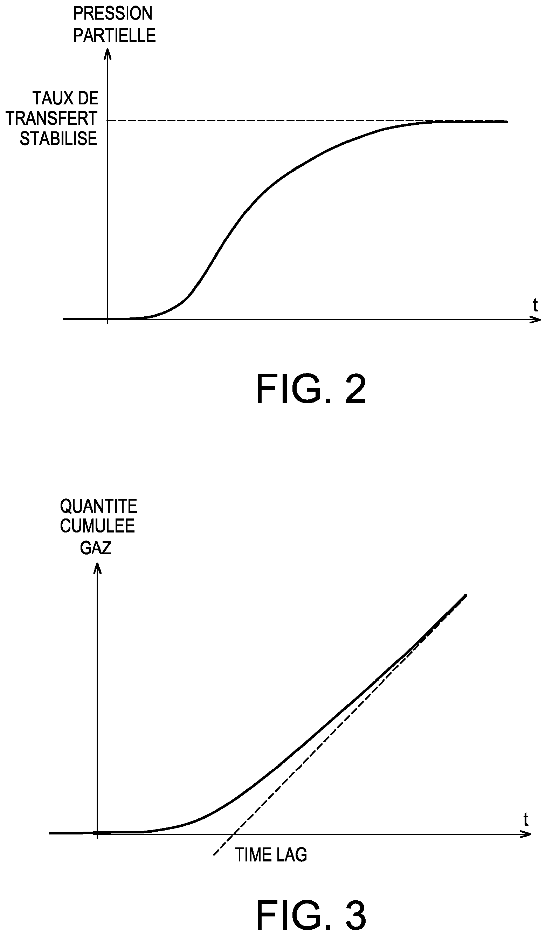

La mesure de perméation de la couche barrière 10 réalisée donne une courbe représentant l'évolution dans le temps de la pression partielle du gaz 18 dans la deuxième chambre 14, telle que représentée sur la figure 2. Dans le cas d'un régime de perméation idéal et sans défaut, c'est-à-dire lorsque le matériau de la couche barrière 10 est homogène et que le coefficient de diffusion de la couche barrière 10 ne varie pas en fonction de la concentration en gaz cible au cours de la mesure, cette courbe, correspondant à l'évolution du taux de transfert du gaz 18 à travers la couche barrière 10, peut être exprimée par l'équation de Fick :

$$ J(t) = 2P_1 S \sum_{n=1}^{\infty} \left( \frac{D}{\pi t} \right)^{\frac{1}{2}} exp\left( \frac{-(2n+1)^2 l^2}{4Dt} \right) \tag{1} $$

avec $P_1$ : pression constante du gaz 18 dans la première chambre 12 ;
S : solubilité de la couche barrière 10 ;
D : coefficient de diffusion de la couche barrière 10 ;
l : épaisseur de la couche barrière 10.

Un paramètre C = $P_1$.S peut également être utilisé dans l'équation (1) ci-dessus.

La courbe donnée par l'équation (1) ci-dessus comporte deux régimes : le premier, dit régime transitoire, correspond à la montée en fonction du temps du flux du gaz cible 18 traversant la couche barrière 10. Le second, dit régime stationnaire, exprime un flux constant du gaz cible 18 traversant la couche barrière 10 par solubilité / diffusion. La caractéristique de flux de gaz cible à mesurer, à savoir le taux de transfert stabilisé, est obtenue à partir du régime stationnaire de la courbe de flux mesurée et correspond à la valeur constante vers laquelle tend cette courbe. Le taux de transfert stabilisé du gaz 18 à travers la couche barrière 10 peut être exprimé par l'équation :

$$J\infty = D.S \frac{\Delta P}{l} \tag{2}$$

avec $\Delta P$ : différence de pression partielle du gaz 18 entre la première chambre 12 et la deuxième chambre 14.

Le taux de transfert stabilisé du gaz 18 à travers la couche barrière 10 peut également être approximé par l'équation :

$$J\infty = \frac{D.C}{l} \tag{3}$$

Lorsque le gaz cible 18 est de la vapeur d'eau, ce taux de transfert stabilisé correspond au WVTR, et lorsque le gaz cible 18 est de l'oxygène ou du dioxygène, ce taux correspond à l'OTR.

De l'analyse des premier et second régimes est également déduit le temps caractéristique du régime transitoire, appelé « Time lag ». Celui-ci est calculé en intégrant la courbe du taux de transfert du gaz 18 à travers la couche barrière 10, représentant ainsi la quantité cumulée du gaz 18 ayant traversé la couche barrière 10, en fonction du temps. Une telle courbe est représentée sur la figure 3. Le paramètre « Time lag » est alors calculé en extrapolant, à quantité nulle, l'évolution linéaire de la quantité cumulée de gaz cible 18 dans le régime stationnaire.

Le régime de perméation peut être plus complexe pour des matériaux barrières comportant plusieurs couches tels des dépôts inorganiques sur substrat polymère et/ou dans le cas de diffusion de gaz fortement adsorbé par le matériau barrière (modification du coefficient de diffusion avec le temps). Dans ce cas, l'évolution du taux de transfert d'un tel régime de perméation complexe peut être exprimée par des lois représentatives bien plus complexes et très dépendantes des matériaux testés. J. McBreen et Al ont proposé une méthode mettant en oeuvre de telles lois dans "A Method for Détermination of the Permeation Rate of Hydrogen Through Metal Membranes" (Journal of the Eletrochemical Society, November 1966, p1218-1222). La mise en œuvre d'une telle mesure de perméation pose toutefois plusieurs problèmes.

Tout d'abord, concernant la sensibilité de la mesure réalisée, la détection du flux du gaz cible 18 s'établissant au travers la couche barrière 10 par le dispositif de mesure 16 n'est possible que si le rapport signal/bruit de fond est conforme aux capacités de détection du dispositif de mesure 16, c'est-à-dire si la valeur du signal mesuré correspondant au flux de gaz 18 à travers la couche 10 est suffisamment élevée pour se détacher du bruit de fond présent dans la deuxième chambre 14. Ce bruit de fond provient de plusieurs facteurs :

- le bruit électronique minimum, ou sensibilité du dispositif de mesure 16, tel que le courant d'ionisation minimum détectable par un spectromètre de masse pour l'isotope du gaz cible considéré ;
- la présence de gaz cible résiduel dans la deuxième chambre 14 provenant notamment du dégazage des parois de la deuxième chambre 14 et de la couche 10 dont on cherche à mesurer la perméation (et également du filament du spectromètre de masse dans le cas d'une mesure par un tel appareil).

Un deuxième facteur complexifiant une telle mesure de perméation est le temps de mesure parfois nécessaire. En effet, les matériaux présentant des propriétés barrières importantes peuvent comporter des régimes transitoires (et donc des « Time lag ») particulièrement longs, pouvant aller jusqu'à plusieurs mois.

Enfin, un troisième facteur complexifiant la mise en œuvre d'une telle mesure est la fiabilité de la mesure réalisée. En effet, la caractéristique de flux permanent du gaz cible mesurée, c'est-à-dire le taux de transfert, peut être aisément tronquée si son relevé est réalisé involontairement de manière anticipée, avant que le régime stationnaire ne soit atteint.

Ces inconvénients se retrouvent également lorsque l'on souhaite réaliser une mesure de flux de gaz dans une enceinte maintenue dans un régime de dépression vis-à-vis du ou des gaz à mesurer, que ce flux corresponde à une montée en pression du gaz cible dans l'enceinte ou une baisse de la pression résiduelle du gaz dans l'enceinte (correspondant par exemple à un dégazage dans l'enceinte, c'est-à-dire au bruit de fond).

**EXPOSÉ DE L'INVENTION**

Un but de la présente invention est de proposer un procédé et un dispositif permettant de simuler l'évolution d'un ou plusieurs flux de gaz dans une enceinte, ou volume, maintenue dans un régime de dépression vis-à-vis du ou des gaz mesurés, de manière fiable et avec un temps réduit. Un but de la présente invention est également de pouvoir réaliser une estimation d'une perméation d'une couche barrière en rendant cette mesure plus sensible, plus fiable et avec un temps réduit par rapport à celui nécessaire aux dispositifs et procédés de mesure de perméation de l'art antérieur pour estimer les propriétés de perméation de la couche barrière.

Pour cela, la présente invention propose un procédé d'estimation d'au moins un flux de gaz dans une enceinte maintenue dans un régime de dépression vis-à-vis du gaz, selon la revendication 1.

Le procédé selon l'invention permet de caractériser le flux de gaz dans l'enceinte sans avoir à attendre nécessairement le régime stationnaire de ce flux pour en déduire la valeur des paramètres A et B qui permettent de caractériser ce flux de gaz. De plus, on améliore la fiabilité d'estimation de ce flux de gaz du fait qu'il n'est plus possible de tronquer involontairement la caractéristique de flux permanent du gaz cible mesurée, c'est-à-dire le taux de transfert, avant que le régime stationnaire ne soit atteint. L'estimation des valeurs des paramètres A et B est réalisée de manière itérative en approchant au mieux l'estimation $J_{estim}(t)$ de la mesure du flux de gaz réalisée $J_{mesure}$.

Le flux de gaz est modélisé par une équation exprimant $J_{estim}(t)$ et présentant des propriétés similaires à l'équation de Fick.

Lorsque ce procédé est appliqué pour réaliser une estimation de la perméation d'une couche barrière, les paramètres A et B estimés peuvent notamment servir à calculer le coefficient de diffusion et/ou la solubilité et/ou le taux de transfert et/ou le Time Lag de la couche barrière.

Du fait que l'enceinte est maintenue dans un régime de dépression vis-à-vis du gaz, ce régime de dépression est donc maintenu de façon permanente (système dynamique) et l'évolution de la pression partielle du gaz cible dans l'enceinte correspond ainsi à un équilibre entre le système réalisant ce régime de dépression, tel qu'un système de pompage (par exemple via l'usage d'une pompe à vide ou d'un flux de gaz neutre) et le flux de gaz cible de l'enceinte. La capacité de pompage peut donc être considérée comme constante quelque soit la pression partielle de gaz cible. Ainsi, l'évolution de la pression partielle peut être considérée comme étant celle du flux de gaz cible. Cela peut être vérifié dans la mesure où le système réalisant le régime de dépression, tel que le système de pompage, est stabilisé et que l'évolution de la pression partielle en gaz cible n'est pas de nature à affecter la vitesse de pompage. Par exemple, dans le cas de l'utilisation d'un système de pompage du gaz cible par vide, cela peut être vérifié si la vitesse nominale de fonctionnement de la pompe est respectée et que la pression dans l'enceinte ne dépasse pas environ $10^{-5}$ mbar.

Les flux peuvent s'exprimer en $cm^3.jour^{-1}$ pour les gaz (ou en $gramme.jour^{-1}$ pour de l'eau). Dans le cas où le flux exprimé est celui d'une mesure de perméation, la valeur de flux peut être normée par la surface de film mesuré (par exemple en $cm^3.jour^{-1}.m^{-2}$).

Le gaz peut être choisi parmi la vapeur d'eau, l'oxygène, le dioxygène, un des isotopes de l'eau ou de l'oxygène, l'hélium, l'hydrogène, ou un mélange d'au moins deux desdits gaz.

L'estimation des valeurs des paramètres A et B comporte au moins la mise en œuvre des étapes suivantes :

$a_1$) choix de valeurs initiales des paramètres A et B ;

$b_1$) calcul de l'estimation du flux de gaz $J_{estim}(t)$ ;

$c_1$) calcul de l'erreur d'estimation;

$d_1$) lorsque l'erreur d'estimation est positive, réduction de la valeur du paramètre A et/ou de la valeur du paramètre B, et lorsque l'erreur d'estimation est négative, augmentation de la valeur du paramètre A et/ou de la valeur du paramètre B ;

et dans lequel la mise en œuvre des étapes $b_1$) à $d_1$) est répétée plusieurs fois successivement jusqu'à atteindre une stabilisation des valeurs estimées des paramètres A et B.

L'étape $c_1$) peut comporter la mise en œuvre des étapes suivantes :

- division de $J_{estim}(t)$ et $J_{mesure}$ en plusieurs parties telles que chacune de ces parties corresponde à $J_{estim}(t)$ et $J_{mesure}$ pour un intervalle de durée distinct des intervalles de durée des autres parties ;
- pour chacune des parties de $J_{estim}(t)$ et $J_{mesure}$, calcul d'un paramètre

$$ErreurJ_{partie\_i} = \int_{t \in partie\_i} (J_{estim}(t) - J_{mesure}),$$

avec partie_i correspondant à l'intervalle de durée des parties correspondantes de $J_{estim}(t)$ et $J_{mesure}$ ;

- calcul de paramètres ErreurA et ErreurB, correspondant respectivement aux erreurs d'estimation des paramètres A et B et formant ensemble l'erreur d'estimation, chacun des paramètres ErreurA et ErreurB étant égal à une combinaison linéaire des paramètres $ErreurJ_{partie\_i}$ ;
et dans lequel l'étape $d_1$) est mise en œuvre telle que :

- lorsque la valeur du paramètre ErreurA est positive, la valeur du paramètre A est réduite ;
- lorsque la valeur du paramètre ErreurA est négative, la valeur du paramètre A est augmentée ;
- lorsque la valeur du paramètre ErreurB est positive, la valeur du paramètre B est réduite ;
- lorsque la valeur du paramètre ErreurB est négative, la valeur du paramètre B est augmentée.

Dans ce cas, certaines parties des courbes du flux de gaz mesuré et de l'estimation du flux de gaz qui ne sont pertinentes que pour l'un seulement des paramètres A et B peuvent ne pas être prises en compte pour l'estimation de l'autre des paramètres A et B.

Une stabilisation des valeurs des paramètres A et B peut être atteinte lorsque les valeurs des paramètres A et B comportent au moins six premiers chiffres, en notation scientifique, identiques à ceux des valeurs des paramètres A et B obtenues lors d'une précédente mise en œuvre des étapes $b_1$) à $d_1$).

Les valeurs des paramètres A et B peuvent être réduites ou augmentées d'un pas variable dont la valeur dépend de précédentes réductions ou augmentations des valeurs des paramètres A et B. Ainsi, il est possible de raccourcir le temps de mise en œuvre du procédé pour obtenir les estimations des valeurs des paramètres A et B.

L'estimation des valeurs des paramètres A et B peut être mise en œuvre plusieurs fois en considérant, à chacune de ces estimations, des valeurs différentes du paramètre OffX et/ou du paramètre OffY, et dans lequel des valeurs finales des paramètres A et B sont choisies comme étant celles pour lesquelles une erreur globale entre le flux de gaz mesuré $J_{mesure}$ et l'estimation du flux de gaz $J_{estim}(t)$ est minimale parmi l'ensemble des étapes d'estimation des valeurs des paramètres A et B mises en œuvre. On peut ainsi aisément corriger un offset, ou décalage, en X (abscisse) et/ou en Y (ordonnée) entre la courbe représentant l'estimation du flux de gaz et la courbe représentant le flux de gaz mesuré.

Lorsqu'une erreur globale entre le flux de gaz mesuré $J_{mesure}$ et l'estimation du flux de gaz $J_{estim}(t)$ atteint une valeur minimale à un instant $t_X$ et est supérieure à cette valeur minimale après $t_X$ (par exemple au moins supérieur d'environ 10% pendant environ au moins 5% de la durée de la mesure), une nouvelle estimation de valeurs de paramètres $A_X$ et $B_X$, correspondant aux paramètres A et B pour $t > t_X$, est mise en œuvre, dans laquelle les valeurs des paramètres $A_X$ et $B_X$ sont estimées de manière itérative en réduisant une erreur d'estimation basée sur une différence, pour $t > t_X$, entre une estimation du flux de gaz $J_{estim\_X}(t)$ calculée sur la base des valeurs estimées des paramètres $A_X$ et $B_X$ et le flux de gaz mesuré $J_{mesure}$ auquel est soustrait l'estimation du flux de gaz $J_{estim}(t)$ pour $t < t_X$, avec X nombre entier supérieur à 1, et dans lequel les paramètres A et B précédemment calculés sont appelés $A_1$ et $B_1$.

L'estimation des valeurs des paramètres A et B peut être mise en œuvre plusieurs fois, ce qui permet de décrire des régimes de perméation complexes de façon universelle sans avoir recours à des modèles particuliers pour chaque matériau. Il est alors déterminé une population de paramètres (A ; B).

L'enceinte maintenue dans un régime de dépression vis-à-vis du gaz peut correspondre à une deuxième chambre d'un perméamètre qui peut comprendre en outre une première chambre et un dispositif de mesure du gaz présent dans la deuxième chambre, la première et la deuxième chambre étant séparées l'une de l'autre par une couche barrière présentant une perméation vis-à-vis du gaz, et dans lequel le flux de gaz mesuré $J_{mesure}$ est obtenu à partir d'une mesure de l'évolution de la pression partielle du gaz dans la deuxième chambre. La mesure de perméation réalisée peut correspondre à la mesure du WVTR ou de l'OTR de la couche barrière.

Il est possible de déterminer le flux de gaz mesuré $J_{mesure}$ à partir de la mesure de la pression partielle et des caractéristiques techniques du perméamètre.

Par exemple, lorsque le dispositif de mesure est un spectromètre de masse, la connaissance de la relation entre le courant d'ionisation du spectromètre et la pression partielle en gaz cible, ou une calibration de la relation pression partielle en gaz cible / flux de gaz cible, permet de déterminer la mesure du flux de gaz.

Lors de la mise en œuvre des étapes de mesure du flux du gaz $J_{mesure}$ et d'estimation des valeurs de paramètres A et B, la couche barrière peut être saturée en gaz, et le flux de gaz mesuré $J_{mesure}$ peut correspondre à une baisse de pression du gaz dans la deuxième chambre du perméamètre.

Le procédé peut comporter en outre, après l'estimation des valeurs des paramètres A et B, le calcul d'un flux de gaz stabilisé $J\infty$ tel que $J\infty = A.B$ ou, lorsqu'une estimation de valeurs de paramètres $A_X$ et $B_X$ est mise en œuvre, le calcul de flux de gaz stabilisés $J\infty_X$ tel que $J\infty_X = A_X.B_X$. Un flux de gaz stabilisé total peut être calculé et correspondre à la somme de $J\infty$ et des $J\infty_X$.

L'invention concerne également un procédé d'estimation d'une perméation d'une couche barrière vis-à-vis d'au moins un gaz, dans lequel la couche barrière sépare une première chambre et une deuxième chambre d'un perméamètre, comportant au moins :

- mise en dépression de la première chambre et de la deuxième chambre vis-à-vis du gaz ;
- première mise en œuvre d'un procédé d'estimation d'un flux de gaz tel que décrit précédemment, tel que le flux de gaz mesuré, appelé $J_{mesure\_degas}$, correspond à une baisse de pression du gaz dans la deuxième chambre ;
- calcul d'une estimation d'un flux de gaz $J_{estim\_degas}(t)$ à partir de dernières valeurs des paramètres A et B précédemment estimées lors de la première mise en œuvre du procédé d'estimation d'un flux de gaz ;
- introduction du gaz dans la première chambre telle que la pression partielle du gaz dans la première chambre soit supérieure à celle dans la deuxième chambre ;
- deuxième mise en œuvre d'un procédé d'estimation d'un flux de gaz tel que décrit précédemment, tel que le flux de gaz mesuré $J_{mesure}$, correspond à une montée en pression du gaz dans la deuxième chambre, et au cours duquel l'estimation de valeurs de paramètres A et B est réalisée en réduisant l'erreur d'estimation basée sur une différence entre une estimation du flux du gaz $J_{estim\_perm}(t)$ et un autre flux de gaz $J_{mesure\_perm}$ tel que $J_{mesure\_perm} = J_{mesure} - J_{estim\_degas}(t)$.. Ce procédé permet dans ce cas, à partir des paramètres A et B estimés lors d'une estimation du bruit de fond dans la deuxième chambre (correspondant à $J_{estim\_degas}(t)$), d'estimer directement la perméation de la couche barrière à partir de ces paramètres.

Ainsi, ce procédé permet de simuler efficacement l'évolution du bruit de fond avant de réaliser la mesure de perméation de la couche barrière. En effet, lors de la première mise en œuvre du procédé d'estimation du flux de gaz, ce flux de gaz correspond à une mesure de bruit de fond dans la deuxième chambre (correspondant aux flux de gaz en provenance des parois de la 2ème chambre, des différents dégazages du dispositif de mesure ainsi que du dégazage de la couche barrière). Lors de la deuxième mise en œuvre du procédé d'estimation du flux de gaz, le flux de gaz mesuré $J_{mesure}$ correspond alors à la somme des flux issus du bruit de fond $J_{estim\_degas}$, c'est-à-dire des dégazages se produisant dans la deuxième chambre, et du flux issu de la perméation du gaz à travers la couche barrière $J_{mesure\_perm}$. En soustrayant l'estimation du flux de gaz $J_{estim\_degas}(t)$ au flux de gaz mesuré $J_{mesure}$ lors de l'estimation des paramètres A et B, on améliore ainsi considérablement la sensibilité de mesure du flux de gaz correspondant à la perméation à travers la couche barrière.

Lorsqu'une population de paramètres (A; B) est déterminée, c'est-à-dire lorsque le mécanisme de diffusion du gaz à travers la couche barrière est complexe, par exemple dans le cas d'une couche barrière comportant des défauts et/ou présentant un coefficient de diffusion variant en fonction de la concentration en gaz cible dans le matériau, le procédé selon l'invention permet d'appliquer les principes de l'équation de Fick à de tels régimes de diffusion complexes qui sont traditionnellement connus pour ne pas répondre à la loi de Fick. Il est donc possible d'appliquer le procédé d'estimation à des couches barrières dont la perméation ne suit pas un modèle régi par un unique régime de perméation (correspondant à une seule équation de Fick) mais suit un modèle correspondant à une somme de plusieurs régimes de perméation différents les uns des autres, chacun pouvant être modélisé à l'aide d'une équation dérivée de l'équation de Fick et dont les paramètres A et B sont distincts de ceux des autres régimes de perméation. De la même façon, l'estimation des paramètres A et B peut être mise en œuvre plusieurs fois afin de décrire au mieux $J_{estim\_degas}(t)$.

Lorsqu'une erreur globale entre le flux de gaz mesuré $J_{mesure\_degas}$ et l'estimation du flux de gaz $J_{estim\_degas}(t)$ est inférieure à la valeur d'un premier seuil $Y_{degas\_inf}$, l'estimation du flux de gaz $J_{estim\_degas}(t)$ est soustraite des valeurs du flux de gaz mesuré $J_{mesure\_perm}$ lors de la deuxième mise en œuvre du procédé d'estimation du flux de gaz et, lorsque l'erreur globale entre le flux de gaz mesuré $J_{mesure\_degas}$ et l'estimation $J_{estim\_degas}(t)$ est supérieure à la valeur d'un deuxième seuil $Y_{degas\_sup}$, une dernière valeur mesurée du flux de gaz $J_{mesure\_degas}$ ou une moyenne de plusieurs dernières valeurs mesurées du flux de gaz $J_{mesure\_degas}$ est soustraite des valeurs du flux de gaz mesuré $J_{mesure\_perm}(t)$ lors de la deuxième mise en œuvre du procédé d'estimation du flux de gaz.

Le procédé peut comporter en outre, après l'estimation des valeurs des paramètres A et B au cours de la deuxième mise en œuvre d'un procédé d'estimation d'un flux de gaz, le calcul d'un flux de gaz stabilisé $J\infty$ tel que $J\infty = A.B$ ou, lorsqu'une estimation de valeurs de paramètres $A_X$ et $B_X$ est mise en œuvre au cours de la deuxième mise en œuvre d'un procédé d'estimation d'un flux de gaz, le calcul de flux de gaz stabilisés $J\infty_X$ tel que $J\infty_X = A_X.B_X$. Un flux de gaz stabilisé total peut être calculé et correspondre alors à la somme de $J\infty$ et des $J\infty_X$.

L'invention concerne également un dispositif d'estimation d'une perméation d'une couche barrière, comportant des moyens de mise en œuvre d'un procédé d'estimation de la perméation de la couche barrière tel que décrit précédemment.

Il est également proposé un procédé d'estimation d'une perméation d'une couche barrière vis-à-vis d'au moins un gaz, comportant au moins une mesure, en fonction du temps, d'un flux du gaz $J_{mesure}$ traversant la couche barrière par perméation, et une estimation des valeurs de paramètres D et S, correspondant respectivement à un coefficient de diffusion et une solubilité de la couche barrière, dans laquelle les valeurs des paramètres D et S sont estimées de manière itérative en réduisant une première erreur d'estimation basée sur une différence entre une estimation du flux du gaz $J_{estim}(t)$ calculée sur la base des valeurs estimées des paramètres D et S et le flux du gaz $J_{mesure}$ mesuré.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un dispositif et un procédé de mesure de perméation d'une couche barrière ;
- les figures 2 et 3 représentent des courbes de mesure de l'évolution d'une pression partielle de gaz et d'une quantité de gaz cumulée en fonction du temps à travers une couche barrière ;
- la figure 4 représente différentes étapes d'un procédé d'estimation de la perméation d'une couche barrière, objet de la présente invention, selon un mode de réalisation particulier;
- la figure 5 représente les étapes mises en œuvre pour réaliser une estimation d'un bruit de fond dans l'enceinte de mesure d'un perméamètre lors d'un procédé d'estimation de la perméation d'une couche barrière, objet de la présente invention, selon un mode de réalisation particulier;
- la figure 6 représente des courbes correspondant au bruit de fond mesuré et au bruit de fond estimé lors d'un procédé d'estimation de la perméation d'une couche barrière, objet de la présente invention, selon un mode de réalisation particulier ;
- la figure 7 représente les étapes mises en œuvre pour réaliser une estimation des paramètres D et S lors d'un procédé d'estimation de la perméation d'une couche barrière, objet de la présente invention, selon un mode de réalisation particulier ;
- les figures 8 à 10 représentent des courbes correspondant au flux de gaz mesuré et au flux de gaz estimé lors d'un procédé d'estimation de la perméation d'une couche barrière, objet de la présente invention, selon un mode de réalisation particulier ;
- la figure 11 représente l'évolution d'une erreur globale entre un flux de gaz estimé et un flux de gaz mesuré lorsque ce flux de gaz est régi par plusieurs régimes de perméation ;
- la figure 12 représente un dispositif de mesure de perméation, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles, tel que définie par les revendications.

## EXPOSÉ DÉTAILLÉ DE MODES DE RÉALISATION PARTICULIERS

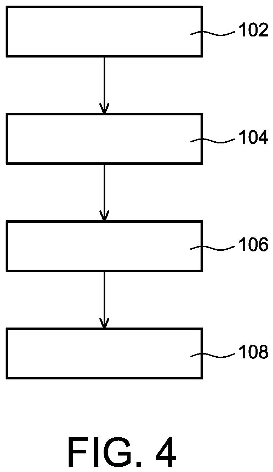

On décrit la mise en œuvre d'un procédé d'estimation de la perméation d'une couche barrière 10, ou film barrière, présentant notamment des propriétés barrières vis-à-vis d'un ou plusieurs gaz, selon un mode de réalisation particulier. Le ou les gaz considérés ici sont par exemple de la vapeur d'eau, du dioxygène, un des isotopes de l'eau ou de l'oxygène, de l'hélium, de l'hydrogène, ou un mélange d'au moins deux de ces gaz. Ce procédé est mis en œuvre en utilisant notamment un perméamètre 11 tel que précédemment décrit en liaison avec la figure 1. Les différentes étapes de ce procédé sont représentées sur la figure 4 sous la forme d'un diagramme.

Une première étape de ce procédé va consister à calculer une estimation de l'évolution dans le temps du bruit de fond dans l'enceinte de détection du perméamètre 11, c'est-à-dire dans la deuxième chambre 14 du perméamètre 11 (étape 102). Cette estimation du bruit de fond va consister à estimer l'évolution du flux de gaz dans l'enceinte formée par la deuxième chambre 14 et qui correspond à une baisse de pression du gaz dans l'enceinte. En effet, le dégazage des parois de la deuxième chambre 14 et de la couche barrière 10 à caractériser est dégressif et varie dans le temps à partir du moment où la deuxième chambre 14 est maintenue dans un régime de dépression vis-à-vis du gaz cible, correspondant par exemple à une mise sous vide de la deuxième chambre 14. L'estimation de l'évolution dans le temps du bruit de fond, appelée $J_{estim\_degas}$, va donc permettre, lors de la mesure et de l'estimation ultérieures de la perméation du gaz à travers la couche barrière 10, de connaitre la composante du bruit de fond dans le flux de gaz transmis à travers la couche barrière 10 qui sera mesuré, appelé $J_{mesure\_perm}$, et donc dans l'estimation de ce flux de gaz, appelée $J_{estim\_perm}(t)$.

Pour réaliser l'estimation de $J_{estim\_degas}$, la couche barrière 10 à caractériser est disposée à l'interface entre la première chambre 12 et la deuxième chambre 14 du perméamètre 11, comme représenté sur le schéma a) de la figure 1.

Les chambres 12 et 14 sont placées en dépression du ou des gaz considérés.

Cette estimation de $J_{estim\_degas}$ est réalisée à partir de mesures du bruit de fond, appelé $J_{mesure\_degas}$. Parallèlement à la mesure de $J_{mesure\_degas}$, des calculs sont donc réalisés pour estimer $J_{estim\_degas}$. Ces calculs sont réalisés de manière itérative en tentant d'approcher au plus près l'estimation $J_{estim\_degas}$ de la mesure $J_{mesure\_degas}$.

Le bruit de fond lié au dégazage dans la deuxième chambre 14 du perméamètre 11 peut correspondre à une courbe de dégazage obéissant à une équation de Fick légèrement modifiée. En effet, l'équation de Fick non modifiée décrit un flux montant, correspondant au flux du gaz 18 traversant la couche barrière 10, et correspond à l'équation (1) indiquée précédemment. La courbe de dégazage correspondant au bruit de fond est un flux décroissant dans le temps qui est exprimé par l'équation (3) suivante :

$$ J_{deg\,as}(t) = P_{init} - 2C \sum_{n=1}^{\infty} \left( \frac{D}{\pi.t} \right)^{\frac{1}{2}} exp\left( \frac{-(2n+1)^2 l^2}{4D.t} \right) \qquad (4) $$

avec l : constante ;

$P_{init}$ : valeur initiale du flux de gaz $J_{mesure\_degas}$.
C : paramètre proportionnel à la solubilité S de la couche barrière 10 ;
D : coefficient de diffusion de la couche barrière 10.

Afin de s'affranchir de la constante l, l'équation (4) ci-dessus peut être mise sous la forme :

$$ J_{deg\,as}(t) = P_{init} - 2A \sum_{n=1}^{\infty} \left( \frac{B}{\pi.t} \right)^{\frac{1}{2}} exp\left( \frac{-(2n+1)^2}{4B.t} \right) \qquad (5) $$

avec A et B : nombres entiers naturels tels que A = C×l et B = D/l².

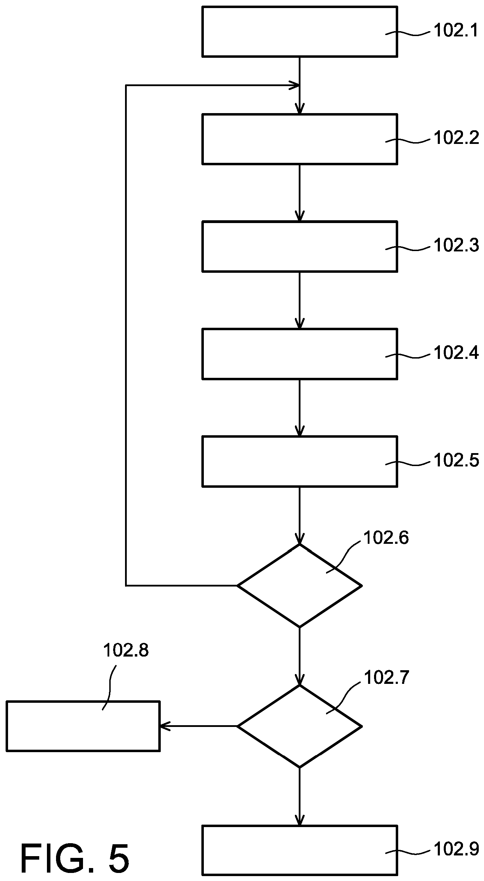

Les étapes mises en œuvre pour réaliser l'estimation du bruit de fond 102 sont représentées sur le diagramme de la figure 5.

On définit tout d'abord des valeurs initiales des paramètres A et B qui vont être utilisés pour calculer l'estimation du bruit de fond (étape 102.1). Ces valeurs initiales des paramètres A et B sont par exemple choisies de manière arbitraire par l'utilisateur, et correspondent par exemple à des valeurs proches de celles attendues et connues de manière empirique.

Un vide, par exemple inférieur à $10^{-6}$ mbar, est réalisé dans la première chambre 12 et la deuxième chambre 14. On réalise alors des mesures, par le dispositif de mesure 16, d'un bruit de fond $J_{mesure\_degas}$ dans la deuxième chambre 14 (étape 102.2) correspondant au dégazage du gaz dans la deuxième chambre 14, ce dégazage étant déclenché par la mise sous vide de la deuxième chambre 14. Les paramètres de cette mesure dépendent notamment de la charge en eau, de la composition et de la structure de la couche barrière 10. La durée de mise en œuvre de cette mesure peut aller de quelques minutes jusqu'à plusieurs jours ou plusieurs semaines si la couche barrière 10 et/ou la deuxième chambre 14 sont fortement polluées par l'eau. Il est par exemple possible de mesurer $J_{mesure\_degas}$ à une fréquence d'un point de mesure toutes les deux secondes, ou à une fréquence supérieure si le dispositif de mesure 16 le permet.

A l'étape 102.3, un calcul d'une estimation de $J_{estim\_degas}(t)$ est ensuite réalisé selon l'équation :

$$ J_{estim\_deg\,as}(t) = P_{init} - 2A \sum_{n=1}^{n\,max} \left( \frac{B}{\pi.t} \right)^{\frac{1}{2}} exp\left( \frac{-(2n+1)^2}{4B.t} \right) \qquad (6) $$

La valeur de $P_{init}$ est la première valeur mesurée de $J_{mesure\_degas}$. Elle correspond à la pression partielle initiale du gaz considéré dans la deuxième chambre 14 et est inférieure au niveau de vide réalisé initialement. Par exemple, dès que la couche barrière 10 chargée en eau sera placée en contact du vide, celle-ci va commencer à dégazer. On ne sera alors plus en présence d'un aussi bon vide que celui obtenu sans la couche barrière chargée. La valeur de $n_{max}$ est par exemple choisie comme étant supérieure ou égale à 1, par exemple égale à 30. Le passage de l'étape 102.2 à l'étape 102.3 se fait lorsque l'on a au moins deux points de mesure, c'est-à-dire au moins deux valeurs de $J_{mesure\_degas}$.

On calcule ensuite une erreur d'estimation de $J_{estim\_degas}$ basée sur une différence entre $J_{estim\_degas}(t)$ et $J_{mesure\_degas}$ (étape 102.4). Contrairement au bruit de fond mesuré $J_{mesure\_degas}$ qui correspond à un nombre fini de points de mesure obtenus sur une durée finie (correspondant à la durée jusqu'à laquelle la mesure est réalisée), le bruit de fond estimé $J_{estim\_degas}(t)$ peut être calculé sur n'importe quelle durée du fait qu'il est exprimé sous la forme d'une fonction mathématique. Pour réaliser le calcul de l'erreur d'estimation de $J_{estim\_degas}(t)$, on considère la fonction $J_{estim\_degas}(t)$ sur une gamme de valeurs de t correspondant à la durée de la mesure de $J_{mesure\_degas}$ précédemment réalisée. On peut ainsi réaliser une comparaison des deux courbes correspondant à $J_{mesure\_degas}$ et $J_{estim\_degas}(t)$ sur un même intervalle de temps.

Du fait des spécificités de l'équation de Fick (1) qui s'appliquent également aux précédentes équations (4) à (6) modélisant l'évolution dans le temps du bruit de fond, le paramètre A peut être considéré comme faisant varier uniquement l'amplitude de la courbe correspondant à $J_{estim\_degas}(t)$, tandis que B peut être considéré comme faisant varier « l'étalement » de cette courbe le long de l'axe des temps. Etant donné que le dégazage correspondant au bruit de fond est toujours décroissant, l'erreur d'estimation de la valeur du paramètre A peut être obtenue en considérant la fin des courbes de mesure et d'estimation du bruit de fond, tandis que celle de la valeur de B peut être visible sans trop d'interférence de A vers le début des courbes de mesure et d'estimation du bruit de fond.

Afin de pouvoir calculer indépendamment les erreurs d'estimation des paramètres A et B, les courbes correspondant à $J_{estim\_degas}(t)$ et $J_{mesure\_degas}$ vont être divisées en plusieurs parties le long de l'axe des temps. Pour chacune de ces parties, un paramètre d'erreur est calculé tel que :

$$ErreurJ_{deg\,as\_partie\_i} = \int_{t \in partie\_i} \left( J_{estim\_deg\,as}(t) - J_{mesure\_deg\,as} \right) \qquad (7)$$

avec partie_i correspondant à l'intervalle de durée des parties correspondantes de $J_{estim\_degas}(t)$ et $J_{mesure\_degas}$. Le calcul de cette intégrale est réalisé en considérant les points de mesure de $J_{mesure\_degas}$ obtenus sur l'intervalle de temps correspondant à la partie des courbes considérée, les valeurs de $J_{estim\_degas}(t)$ étant calculées pour différentes valeurs de t correspondant aux instants auxquels les points de mesure de $J_{mesure\_degas}$ ont été obtenus.

L'erreur de chacune de ces parties correspond à la surface se trouvant entre les courbes de mesure et d'estimation au niveau de chacune de ces parties.

L'erreur est positive lorsque cette surface est au-dessus de la courbe de mesure (cas d'une surestimation du bruit de fond), et négative lorsque cette surface est en-dessous de la courbe de mesure (cas d'une sous-estimation du bruit de fond).

Ces différentes intégrales sont ensuite combinées entre elles pour calculer des erreurs d'estimation des paramètres A et B.

Une première possibilité pour calculer les erreurs d'estimation des paramètres A et B peut consister à considérer les courbes de mesure et d'estimation du bruit de fond comme étant formées chacune de deux parties distinctes en « coupant » l'axe des temps en deux. Sur l'exemple de la figure 6, la courbe 50 représente le bruit de fond mesuré $J_{mesure\_degas}$ et comporte une première partie 50.1 pour $t \in [0;t_1]$ et une deuxième partie 50.2 pour $t \in [t_1;t_2]$. La courbe 52 représente l'estimation du bruit de fond $J_{estim\_degas}(t)$ et comporte une première partie 52.1 pour $t \in [0;t_1]$ et une deuxième partie 52.2 pour $t \in [t_1;t_2]$. Les valeurs de $t_1$ et $t_2$ sont par exemple telles que celle de $t_2$ est égale à environ le double de celle de $t_1$, l'intervalle $[0;t_2]$ correspondant par exemple à la durée totale pendant laquelle le bruit de fond a été mesuré. L'erreur d'estimation sur chacune de ces deux parties est alors calculée selon l'équation (7) ci-dessus, en calculant l'intégrale de la différence entre l'estimation et la mesure du bruit de fond. Les erreurs des paramètres A et B sont alors calculées telles que :

$$ErreurB = \int_{t \in [0;t1]} \left( J_{estim\_deg\,as}(t) - J_{mesure\_deg\,as} \right) = ErreurJ_{deg\,as\_partie\_1} \qquad (8)$$

$$ErreurA = \int_{t \in [t1;t2]} \left( J_{estim\_deg\,as}(t) - J_{mesure\_deg\,as} \right) = ErreurJ_{deg\,as\_partie\_2} \qquad (9)$$

Une deuxième possibilité pour calculer ErreurA et ErreurB peut consister à considérer les courbes de mesure et d'estimation comme étant formées chacune de quatre parties distinctes : une première partie de chacune des deux courbes sur un intervalle $t \in [0;t_1]$, une deuxième partie de chacune des deux courbes sur un intervalle $t \in [t_1;t_2]$, une troisième partie de chacune des courbes sur un intervalle $t \in [t_2;t_3]$, et une quatrième partie de chacune des courbes sur un intervalle $t \in [t_3;t_4]$. Ici, $t_4$ correspond à la fin de la mesure du bruit de fond, et ces quatre parties couvrent chacune environ un quart de cette durée totale. L'erreur sur chacune de ces quatre parties est alors calculée selon l'équation (7) ci-dessus, en calculant l'intégrale de la différence entre l'estimation et la mesure du bruit de fond. Les erreurs des paramètres A et B sont alors calculées en combinant les différentes erreurs calculées pour les différentes parties des courbes telles que par exemple :

$$ErreurB = \int_{t\in[0;t1]}\left(J_{estim\_deg\,as}(t) - J_{mesure\_deg\,as}\right) + 2\int_{t\in[t1;t2]}\left(J_{estim\_deg\,as}(t) - J_{mesure\_deg\,as}\right)$$

$$+3\int_{t\in[t2;t3]}\left(J_{estim\_deg\,as}(t) - J_{mesure\_deg\,as}\right) \qquad (10)$$

$$ErreurA = 2\int_{t\in[t3;t4]}\left(J_{estim\_deg\,as}(t) - J_{mesure\_deg\,as}\right) + \int_{t\in[t2;t3]}\left(J_{estim\_deg\,as}(t) - J_{mesure\_deg\,as}\right) \quad (11)$$

On a donc dans ce cas :

ErreurB= ErreurJ$_{degas\_partie\_10}$ + 2.ErreurJ$_{degas\_partie\_2}$ + 3.ErreurJ$_{degas\_partie\_3}$, et
ErreurA= 2.ErreurJ$_{degas\_partie\_4}$ + ErreurJ$_{degas\_partie\_3}$.

Une troisième possibilité pour calculer les erreurs d'estimation des paramètres A et B peut consister à considérer les courbes de mesure et d'estimation comme étant formées chacune de quatre parties distinctes : une première partie de chacune des deux courbes sur un intervalle $t \in [t_1;t_2]$, une deuxième partie de chacune des deux courbes sur un intervalle $t \in [t_2;t_3]$, une troisième partie de chacune des courbes sur un intervalle $t \in [t_3;t_4]$, et une quatrième partie de chacune des courbes sur un intervalle $t \in [t_4;t_5]$. Ici, $t_5$ correspond à la fin de la mesure du bruit de fond et $t_1$ correspond à la valeur de t par exemple à partir de laquelle les valeurs de J$_{mesure\_degas}$ sont inférieures à la somme de la première valeur mesurée de J$_{mesure\_degas}$ et du double de l'écart type des 30 premières valeurs mesurées de J$_{mesure\_degas}$. Les intervalles de temps de ces quatre parties correspondent à des durées approximativement égales entre elles. L'erreur de chacune de ces quatre parties est alors calculée comme exposé ci-dessus selon l'équation (7), en calculant l'intégrale de la différence entre l'estimation et la mesure du bruit de fond. Les erreurs des paramètres A et B sont alors calculées en combinant les différentes erreurs calculées pour les différentes parties des courbes telles que par exemple :

$$ErreurB = \int_{t\in[t1;t2]}\left(J_{estim\_deg\,as}(t) - J_{mesure\_deg\,as}\right) + 2\int_{t\in[t2;t3]}\left(J_{estim\_deg\,as}(t) - J_{mesure\_deg\,as}\right)$$

$$+3\int_{t\in[t3;t4]}\left(J_{estim\_deg\,as}(t) - J_{mesure\_deg\,as}\right) \qquad (12)$$

$$ErreurA = 2\int_{t\in[t4;t5]}\left(J_{estim\_deg\,as}(t) - J_{mesure\_deg\,as}\right) + \int_{t\in[t3;t4]}\left(J_{estim\_deg\,as}(t) - J_{mesure\_deg\,as}\right) \quad (13)$$

Les trois possibilités de calcul des erreurs des paramètres A et B exposées ci-dessus sont des exemples de réalisation, et d'autres combinaisons linéaires des erreurs des différentes parties des courbes de mesure et d'estimation du bruit de fond peuvent être réalisées pour calculer ErreurA et ErreurB. Il est également possible de prendre en compte des parties de courbes se chevauchant en partie les unes aux autres.

Une fois les calculs d'erreurs d'estimation des paramètres A et B effectués, les valeurs des paramètres A et B sont modifiées en leur ajoutant ou soustrayant un « pas » respectif, en fonction de la valeur, et notamment du signe, de l'erreur d'estimation du paramètre (étape 102.5). Si l'erreur du paramètre (ErreurA ou ErreurB) est négative, cela signifie que la valeur estimée du paramètre est trop petite, et donc que la valeur estimée du paramètre correspondant doit être augmentée. Inversement, si l'erreur du paramètre est positive, cela signifie que la valeur estimée du paramètre est trop grande et donc que la valeur estimée du paramètre doit être réduite. La valeur du pas de chaque paramètre est par exemple comprise entre environ $1.10^{-25}$ et $1.10^{-6}$.

A l'étape 102.6, une stabilisation de l'estimation du bruit de fond est ensuite évaluée en analysant la variation des estimations des paramètres A et B par rapport à l'estimation précédente (lorsqu'il s'agit de la première estimation des paramètres A et B, les étapes 102.2 à 102.6 sont automatiquement répétées). En effet, si les valeurs de ces paramètres se stabilisent, cela signifie que le modèle choisi pour l'estimation (donc les valeurs de A et B) correspond bien à la mesure et donc que l'estimation réalisée du bruit de fond est stable. On considère par exemple que les valeurs des paramètres A et B sont stabilisées lorsque les valeurs de ces paramètres comportent au moins six premiers chiffres, en notation scientifique, identiques à ceux des valeurs de ces paramètres obtenues lors d'une précédente estimation. Si les valeurs des paramètres A et B ne sont pas stabilisées, les étapes 102.2 à 102.6 sont répétées jusqu'à obtenir une stabilisation de ces paramètres.

Lorsque les valeurs des paramètres A et B sont considérées comme stables, l'estimation du bruit de fond $J_{estim\_degas}(t)$ obtenue à partir des valeurs estimées de A et B est comparée de manière globale à $J_{mesure\_degas}$ afin de déterminer si cette estimation est satisfaisante (étape 102.7). Afin de quantifier la justesse de cette estimation, celle-ci peut être définie comme étant l'inverse d'une erreur globale entre le bruit de fond estimé $J_{estim\_degas}(t)$ et la mesure du bruit de fond $J_{mesure\_degas}$. Ainsi, plus l'erreur globale calculée est faible, plus l'estimation du bruit de fond est juste. Cette erreur globale peut être par exemple définie comme étant la somme rapportée à chaque point de la différence au carré entre la mesure et l'estimation telle que :

$$ErrGlobJ_{deg\,as} = \frac{1}{p}\sum_{i=1}^{p}\left(J_{mesure\_deg\,as}(i) - J_{estim\_deg\,as}(i)\right)^2 \qquad (14)$$

avec p correspondant au nombre de points pris en compte, par exemple égal au nombre de points de mesure du bruit de fond.

Il est possible de réduire l'influence de l'offset selon l'axe Y de la mesure (offset sur l'axe de la valeur de la pression) en début de mesure en calculant l'erreur globale selon l'équation :

$$ErrGlobJ_{deg\,as} = \frac{1}{p-a}\sum_{i=a}^{p}\left(J_{mesure\_deg\,as}(i) - J_{estim\_deg\,as}(i)\right)^2 \qquad (15)$$

avec a représentant le début de la décroissance du signal $J_{mesure\_degas}$, par exemple le point à partir duquel la valeur du signal de mesure $J_{mesure\_degas}$ est inférieure à la moyenne des premiers points de mesure moins deux fois l'écart type associé sur une durée suffisamment longue, par exemple sur environ 10 points de mesure.

La mesure et l'estimation du bruit de fond peuvent être réalisées en lien avec la sensibilité désirée par l'opérateur pour la mesure. Le dispositif servant à la mise en œuvre de ce procédé peut notamment indiquer en permanence la sensibilité de l'appareil de mesure au temps t en appliquant par exemple un facteur multiplicatif de 100 par rapport au bruit de fond estimé.

Cette erreur globale est par exemple calculée au bout de 10 minutes de mesure, avec une durée par exemple inférieure à environ 1 semaine.

Si l'adéquation entre l'estimation et la mesure du bruit de fond est considérée comme insuffisante, c'est-à-dire si l'erreur globale calculée ci-dessus est supérieure à un seuil $Y_{degas\_sup}$ par exemple égal à environ 15%, l'opérateur peut tout de même lancer la mesure du flux de gaz à travers la couche barrière à caractériser. La sensibilité indiquée peut être considérée telle qu'il y ait un rapport de 1/100 entre le bruit de fond mesuré au moment du lancement de la mesure et la sensibilité de mesure voulue par l'opérateur. Il est également possible que la sensibilité corresponde à environ 1/100 d'une moyenne des derniers points de mesure du bruit de fond correspondant par exemple à environ 20% de la mesure si la stabilisation est atteinte.

Une valeur fixe correspondant au bruit de fond (dernière valeur mesurée du bruit de fond ou moyenne des dernières valeurs mesurées du bruit de fond) sera soustraite de la mesure de perméation réalisée par la suite (étape 102.8).

L'opérateur peut également interrompre à tout moment l'estimation du bruit de fond s'il considère que la sensibilité, correspondant au seuil minimal de détection d'une valeur stabilisée par rapport au bruit de fond, obtenue à ce moment là est suffisante pour la mesure.

Si l'adéquation entre la simulation et la mesure du bruit de fond est considérée comme suffisante, c'est-à-dire si l'erreur globale calculée est inférieure à un seuil $Y_{degas\_inf}$, par exemple égal à 5 %, la sensibilité indiquée considère alors la dispersion des points de mesure de $J_{mesure\_degas}$ autour de la courbe de $J_{estim\_degas}(t)$. En effet, dans ce cas, les points de mesure du dégazage représentent une gaussienne autour d'une moyenne qu'est le point simulé (pour le temps considéré). Cette dispersion est caractérisée par son écart type. L'écart entre la courbe de simulation du dégazage et les points mesurés permet d'obtenir la courbe de mesure. Ainsi, un écart prolongé (par exemple de l'ordre de quelques dizaines de secondes, ou d'une ou plusieurs minutes) supérieur à 2 fois l'écart type correspondra au signal en provenance de l'échantillon et ne sera donc pas attribuable à un phénomène de dégazage. La courbe d'estimation $J_{estim\_degas}(t)$ pourra être soustraite de la mesure de perméation réalisée ensuite (étape 102.9).

Pour chacune de ces possibilités, un démarrage automatique de la mesure du flux de gaz peut être programmé. L'opérateur indique alors simplement la sensibilité désirée pour la mesure. La procédure de mesure démarre automatiquement dès que les conditions souhaitées par l'utilisateur sont réunies, c'est-à-dire lorsque la sensibilité de mesure voulue par l'opérateur est supérieure à 2 fois l'écart-type.

Si l'adéquation entre l'estimation et la mesure du bruit de fond n'est pas considérée comme suffisante, c'est-à-dire si l'erreur globale indiquée ci-dessus est comprise entre $Y_{degas\_sup}$ et $Y_{degas\_inf}$, il est alors possible de considérer que l'évolution du bruit de fond suit une première équation $J_{estim\_degas\_1}(t)$, basée sur les valeurs des paramètres A et B calculés et appelés $A_1$ et $B_1$, sur une première plage de valeurs de t, et que ce bruit de fond suit également une ou plusieurs autres équations $J_{estim\_degas\_X}(t)$ s'additionnant à la première équation $J_{estim\_degas\_1}(t)$, basée sur des paramètres $A_X$ et $B_X$ différents de $A_1$ et $B_1$, sur une ou plusieurs autres plages de valeurs de t, avec X nombre entier supérieur à 1.

En effet, un bruit de fond, ou plus généralement un dégazage, peut comporter plusieurs régimes correspondant chacun à un modèle de Fick (correspondant à l'équation (5) ci-dessus) régi par ses propres paramètres A et B. Dans ce cas, le modèle de l'évolution du bruit de fond peut s'exprimer par l'équation :

$$J_{estim\_deg\,as\_total}(t) = \sum_{i=1}^{m} J_{estim\_deg\,as\_i}(t) \qquad (16)$$

où m est alors le nombre de régimes de dégazage correspondant au bruit de fond.

Ces m régimes de dégazage s'additionnent. Il convient donc de déterminer à quel moment le régime de dégazage change de sorte qu'un nouveau régime doit être ajouté à $J_{estim\_degas\_total}(t)$. Ce moment est déterminé par le suivi de l'erreur globale précédemment calculée. Afin de déterminer au mieux la somme de plusieurs régimes de dégazage, l'erreur globale précédemment décrite peut être définie par l'équation suivante :

$$ErrGlobJ_{deg\,as} = \frac{1}{p} \sum_{i=1}^{p} \frac{J_{mesure\_deg\,as}(i) - J_{estim\_deg\,as}(i)}{J_{mesure\_deg\,as}(i)} \qquad (17)$$

Pour pouvoir obtenir les paramètres A et B de l'ensemble des régimes de dégazage, les paramètres du premier régime de dégazage, appelé $J_{degas\_1}$, sont fixés lorsque l'erreur commence à augmenter. Il est ainsi possible de soustraire le premier régime de dégazage à la mesure pour faire apparaître un nouveau signal ne dépendant que du ou des prochains régimes de dégazage $J_{degas\_X}$, avec X nombre entier supérieur à 1. Ce signal pourra être ainsi traité de la même manière que la mesure pour en extraire les autres régimes de dégazage.

La détermination de $A_1$ et $B_1$, permettant de déterminer $J_{degas\_1}$, utilise les données estimées juste avant que l'erreur globale n'augmente de plus de 30% du point considéré pendant une durée suffisamment longue (1H30 par exemple, ou plus dans le cas de fortes propriétés barrières, comme une journée ou plus). Les étapes 102.2 à 102.6 sont mises en œuvre uniquement à partir de ces données jusqu'à obtenir des valeurs stabilisées de $A_1$ et $B_1$.

Dans le cas présent, des étapes similaires aux étapes 102.1 à 102.6 peuvent être mises en œuvre (de manière itérative comme précédemment décrit) en soustrayant à la mesure le ou les précédents régimes de dégazage pour extraire et déterminer les régimes de dégazage suivants.

Chacun des régimes de dégazage est régi par sa propre équation (correspondant à l'équation (5) précédente) et comporte donc ses propres paramètres A et B caractérisant le dégazage se produisant dans la période du régime de dégazage considérée.

A l'étape 102.5, il est possible de faire varier A et B par exemple selon un pas constant comme précédemment décrit, ou bien selon un pas de valeur variable, c'est-à-dire une valeur multipliée par un coefficient propre à chaque paramètre et dont la valeur peut changer selon l'évolution de l'erreur sur les paramètres A et B. Ainsi, ce coefficient sera par exemple divisé par 2 si le paramètre oscille entre deux valeurs, ce qui permet de gagner en précision sur le paramètre estimé. De la même manière, le coefficient sera par exemple augmenté d'environ 10 % si le paramètre évolue plusieurs fois d'affilées dans la même direction, ce qui permet d'améliorer la rapidité de l'estimation, lorsque les valeurs des paramètres A et B estimés sont trop éloignées des valeurs finales.

Par exemple, à chaque itération de l'étape 102.5, la valeur de B peut être modifiée en ajoutant ou soustrayant un pas ΔB et/ou la valeur de A peut être modifiée en ajoutant ou soustrayant un pas ΔA telles que :

- Si B évolue deux fois de suite dans le même sens, on peut augmenter par exemple ΔB de 10%.
- Si A évolue deux fois de suite dans le même sens, on peut augmenter par exemple ΔA de 10%.
  Exemple pour A :

  estimation 1 avec A(1) ;
  si ErreurA positive, alors estimation 2 avec A(2) = A(1) - ΔA;
  si ErreurA encore positive, alors ΔA = ΔA x 1,1, et estimation 3 avec A(3) = A(2) - ΔA ;

- Si B et/ou A oscille autour de la même valeur (Exemple : B(i) = B(i-2) et/ou A(i) = A(i-2)), on peut diviser ∆A et/ou ∆B par 2.
  Exemple :

      estimation 1 avec B(1) et/ou A(1) ;
      si ErreurB et/ou ErreurA positives, alors estimation 2 avec B(2) = B(1) - ∆B et/ou A(2) = A(1) - ∆A ;
      si ErreurB et/ou ErreurA négatives, alors estimation 3 avec B(3) = B(2) + ∆B = B(1) et/ou A(3) = A(2) + ∆A = A(1), et ∆B = ∆B/2 et/ou ∆A = ∆A/2 ;

- Dans les autres cas, ∆B et ∆A peuvent rester constants.

Il n'y a pas de limite dans le nombre de points de mesure du bruit de fond pouvant être utilisés pour réaliser l'estimation du bruit de fond. Toutefois, afin de réduire la charge de calcul, il est possible de moyenner le signal de mesure autour d'un nombre maximum de points (par exemple 2000).

Ainsi, au cours de l'étape 102, l'évolution du bruit de fond est estimée grâce à l'estimation des valeurs des paramètres A et B qui permettent d'en déduire $J_{estim\_degas}(t)$. Dans le mode de réalisation décrit ici, les valeurs estimées des paramètres A et B obtenues lors de l'estimation du bruit de fond ne sont pas utilisées pour en déduire directement le taux de transfert stabilisé J∞ de la couche barrière 10.

La mesure du flux de gaz 18 à travers la couche barrière 10 est ensuite réalisée (étape 104). La deuxième chambre 14 étant déjà sous vide, la première chambre 12 du perméamètre 11 est alors remplie par le ou les gaz 18 pour lesquels on souhaite mesurer la perméation à travers la couche barrière 10. Ce flux mesuré, appelé $J_{mesure}$, va être utilisé pour estimer l'évolution dans le temps du flux de gaz lié à la perméation (étape 106), et ainsi pouvoir estimer le taux de transfert stabilisé exprimé par l'équation (2) ci-dessus ainsi qu'éventuellement le Time lag de la couche barrière 10 (étape 108).

Le flux de gaz 18 mesuré à travers la couche barrière 10, qui est directement proportionnel la mesure de la pression partielle du ou des gaz dans la seconde chambre 14, est régi par l'équation de Fick, correspondant à l'équation (1) précédemment mentionnée. Le flux de gaz correspondant à la perméation à travers la couche barrière 10 peut donc être exprimé par l'équation :

$$J_{perm}(t) = 2C \sum_{n=1}^{\infty} \left( \frac{D}{\pi.t} \right)^{\frac{1}{2}} exp\left( \frac{-(2n+1)^2 l^2}{4Dt} \right) \qquad (18)$$

avec l : épaisseur de la couche de matériau.

Par analogie avec l'équation (6) précédemment décrite pour l'estimation du bruit de fond, le flux de gaz correspondant à la perméation à travers la couche barrière 10 peut donc être exprimé par l'équation :

$$J_{estim\_perm}(t) = 2A \sum_{n=1}^{n\,max} \left( \frac{B}{\pi.t} \right)^{\frac{1}{2}} exp\left( \frac{-(2n+1)^2}{4B.t} \right) \qquad (19)$$

avec $n_{max}$ : nombre entier supérieur ou égal à 1, par exemple égal à 30.

Comme pour l'estimation de l'évolution du bruit de fond précédemment décrite, l'estimation de l'évolution du flux de gaz est déterminée de manière itérative en tentant d'approcher au plus près l'estimation de la mesure.

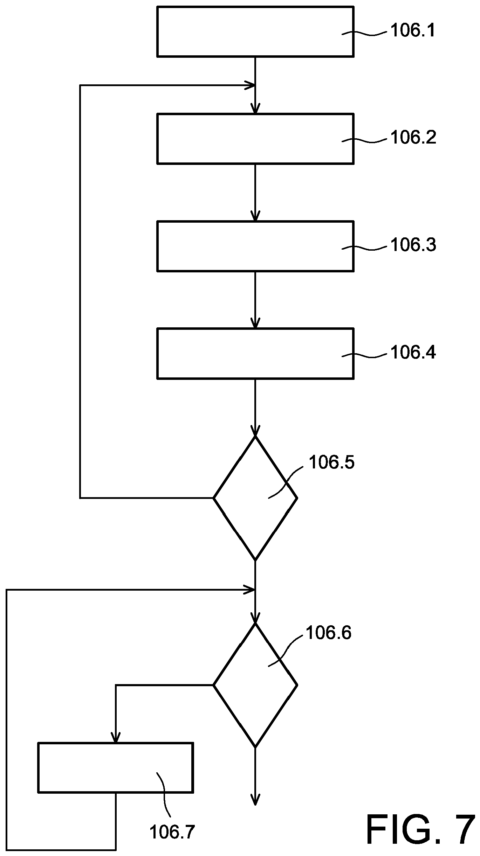

Les étapes mises en œuvre pour calculer l'estimation du flux de gaz $J_{estim\_perm}(t)$ sont représentées sur le diagramme de la figure 7.

On définit tout d'abord des valeurs initiales des paramètres A et B qui vont être utilisés pour calculer l'estimation $J_{estim\_perm}(t)$ (étape 106.1). Ces valeurs initiales des paramètres A et B sont par exemple choisies de manière arbitraire par l'utilisateur.

A l'étape 106.2, un calcul d'une estimation du flux de gaz $J_{estim\_perm}(t)$ est ensuite réalisé selon l'équation (19) ci-dessus.

On calcule ensuite une erreur d'estimation du flux de gaz basée sur une différence entre l'estimation du flux $J_{estim\_perm}(t)$ et les valeurs des mesures du flux $J_{mesure\_perm}$ qui correspond au flux mesuré $J_{mesure}$ moins le bruit de fond précédemment estimé $J_{estim\_degas}(t)$ (étape 106.3). Cette erreur d'estimation va être calculée de manière sensiblement analogue à l'erreur d'estimation du bruit de fond précédemment calculée.

Contrairement au flux mesuré $J_{mesure}$, et donc également à $J_{mesure\_perm}$, qui correspond à un nombre fini de points de mesure obtenus sur une durée finie (correspondant à la durée jusqu'à laquelle la mesure est réalisée), le flux de gaz estimé $J_{estim\_Perm}(t)$ peut être calculé sur n'importe quelle durée du fait que le flux de gaz estimé est exprimé sous la forme d'une fonction mathématique. Pour réaliser le calcul de l'erreur d'estimation du flux de gaz, on considère la fonction $J_{estim\_perm}(t)$ sur une gamme de valeurs de t correspondant à la durée de la mesure du flux de gaz réalisée. On peut ainsi réaliser une comparaison des deux courbes correspondant à $J_{mesure\_perm}$ et $J_{estim\_perm}(t)$ sur un même intervalle de temps.

Comme précédemment décrit pour le bruit de fond, du fait des spécificités de l'équation de Fick, le paramètre A peut être considéré comme faisant varier uniquement l'amplitude de l'estimation $J_{estim\_perm}(t)$, tandis que B peut être considéré comme faisant varier « l'étalement » de la courbe le long de l'axe des temps.

Différentes parties de $J_{mesure\_perm}$ et $J_{estim\_perm}(t)$ sont considérées pour déterminer indépendamment les erreurs d'estimation des paramètres A et B.

Afin de pouvoir calculer indépendamment les erreurs d'estimation des paramètres A et B, $J_{estim\_perm}(t)$ et $J_{mesure\_perm}$ sont divisées en plusieurs parties le long de l'axe des temps. Pour chacune de ces parties, un paramètre d'erreur est calculé tel que :

$$ErreurJ_{perm\_partie\_i} = \int_{t \in partie\_i} \left( J_{estim\_perm}(t) - J_{mesure\_perm} \right) \qquad (20)$$

avec partie_i correspondant à l'intervalle de durée des parties correspondantes de $J_{estim\_perm}(t)$ et $J_{mesure\_perm}$. Le calcul de cette intégrale est réalisé en considérant les points de mesure de $J_{mesure\_perm}$ obtenus sur l'intervalle de temps correspondant à la partie des courbes considérée, les valeurs de $J_{estim\_perm}(t)$ étant calculées pour différentes valeurs de t correspondant aux instants correspondant des points de mesure de $J_{mesure\_perm}$.

L'erreur de chacune de ces parties correspond à la surface se trouvant entre les courbes de mesure et d'estimation au niveau de ces parties. L'erreur est positive lorsque cette surface est au-dessus de la courbe de mesure, et négative lorsque cette surface est en-dessous de la courbe de mesure. Ces différentes intégrales sont combinées entre elles pour calculer les erreurs d'estimation des paramètres A et B.

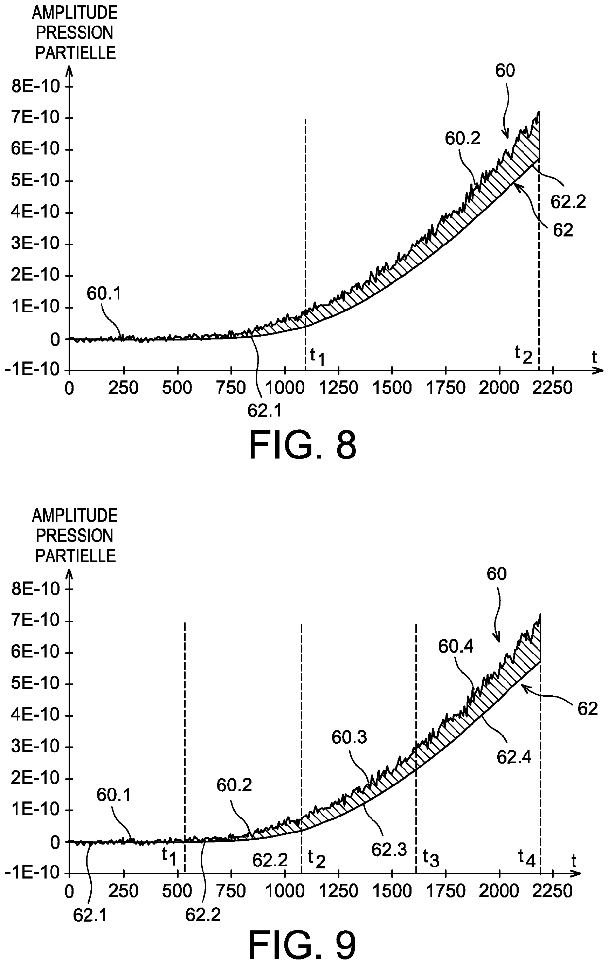

Comme précédemment décrit pour l'estimation du bruit de fond, une première variante pour calculer les erreurs d'estimation des paramètres A et B peut consister à considérer les courbes de mesure et d'estimation du flux de gaz comme étant chacune formée de deux parties distinctes en « coupant » l'axe des temps en deux. Sur l'exemple de la figure 8, la courbe 60 représente le flux de gaz mesuré $J_{mesure\_perm}$ et comporte une première partie 60.1 pour $t \in [0;t_1]$ et une deuxième partie 60.2 pour $t \in [t_1;t_2]$. Les valeurs de $t_1$ et $t_2$ peuvent être différentes de celles précédemment décrites pour déterminer l'erreur d'estimation du bruit de fond. La courbe 62 représente l'estimation du flux de gaz $J_{estim\_perm}(t)$ et comporte une première partie 62.1 pour $t \in [0;t_1]$ et une deuxième partie 62.2 pour $t \in [t_1;t_2]$. Les valeurs de $t_1$ et $t_2$ sont par exemple telles que $t_2$ est égal à environ le double de $t_1$, l'intervalle $[0;t_2]$ correspondant à la durée totale pendant laquelle le flux de gaz a été mesuré. L'erreur d'estimation de chacune de ces deux parties est alors calculée selon l'équation (15) ci-dessus, en calculant l'intégrale de la différence entre l'estimation et la mesure du flux de gaz. Les erreurs des paramètres A et B sont alors calculées telles que :

$$ErreurB = \int_{t \in [0;t1]} \left( J_{estim\_perm}(t) - J_{mesure\_perm} \right) = ErreurJ_{perm\_partie\_1} \qquad (21)$$

$$ErreurA = \int_{t \in [t1;t2]} \left( J_{estim\_perm}(t) - J_{mesure\_perm} \right) = ErreurJ_{perm\_partie\_2} \qquad (22)$$

De manière analogue au bruit de fond précédemment estimé, une deuxième variante pour calculer les erreurs d'estimation des paramètres A et B peut consister à considérer les courbes de mesure et d'estimation comme étant chacune formée de quatre parties distinctes, comme représenté sur la figure 9 : une première partie 60.1 et 62.1 de chacune des deux courbes sur un intervalle $t \in [0;t_1]$, une deuxième partie 60.2 et 62.2 de chacune des deux courbes sur un intervalle $t \in [t_1;t_2]$, une troisième partie 60.3 et 62.3 de chacune des courbes sur un intervalle $t \in [t_2;t_3]$, et une quatrième partie 60.4 et 62.4 de chacune des courbes sur un intervalle $t \in [t_3;t_4]$. Ici, $t_4$ correspond à la fin de la mesure du flux de gaz, et ces quatre parties couvrent chacune environ un quart de cette durée totale. L'erreur sur chacune de ces quatre parties est alors calculée selon l'équation (20) ci-dessus, en calculant l'intégrale de la différence entre l'estimation et la mesure du flux de gaz. Les erreurs des paramètres A et B sont alors calculées en combinant les différentes erreurs calculées pour les différentes parties de courbes telles que par exemple :

$$ErreurB = \int_{t\in[0;t1]}\left(J_{estim\_perm}(t)-J_{mesure\_perm}\right)+2\int_{t\in[t1;t2]}\left(J_{estim\_perm}(t)-J_{mesure\_perm}\right)$$
$$+3\int_{t\in[t2;t3]}\left(J_{estim\_perm}(t)-J_{mesure\_perm}\right) \qquad (23)$$

$$ErreurA = 2\int_{t\in[t3;t4]}\left(J_{estim\_perm}(t)-J_{mesure\_perm}\right)+\int_{t\in[t2;t3]}\left(J_{estim\_perm}(t)-J_{mesure\_perm}\right) \qquad (24)$$

On a donc

ErreurB = ErreurJ$_{perm\_partie\_1}$ + 2.ErreurJ$_{perm\_partie\_2}$ + 3.ErreurJ$_{perm\_partie\_3}$, et
ErreurA= 2.ErreurJ$_{perm\_partie\_4}$ + ErreurJ$_{perm\_partie\_3}$.

Par rapport à la première variante exposée précédemment consistant à séparer les courbes en deux parties, une division en quatre parties des courbes de mesure et d'estimation pour calculer les erreurs d'estimation des paramètres A et B permet d'obtenir au final une erreur globale d'estimation plus faible notamment lorsque la couche de mesure présente un léger offset en X, c'est-à-dire un décalage sur l'axe des temps, par rapport au modèle théorique.

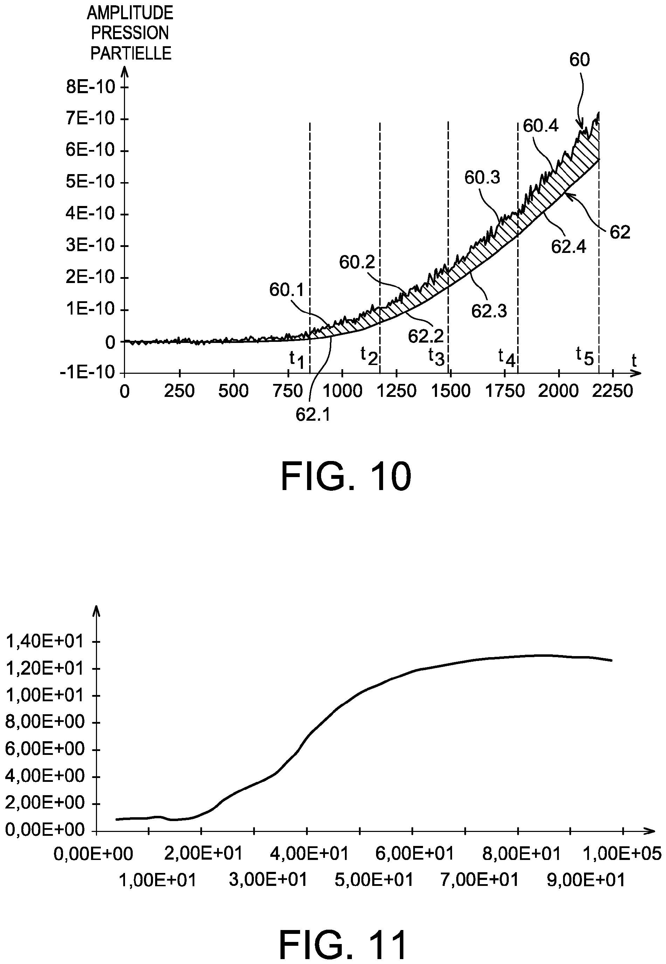

Une troisième variante pour calculer les erreurs d'estimation des paramètres A et B peut consister à considérer les courbes de mesure et d'estimation comme étant formées chacune de quatre parties distinctes comme représenté sur la figure 10: une première partie 60.1 et 62.1 de chacune des deux courbes sur un intervalle $t \in [t_1;t_2]$, une deuxième partie 60.2 et 62.2 de chacune des deux courbes sur un intervalle $t \in [t_2;t_3]$, une troisième partie 60.3 et 62.3 de chacune des courbes sur un intervalle $t \in [t_3;t_4]$, et une quatrième partie 60.4 et 62.4 de chacune des courbes sur un intervalle $t \in [t_4;t_5]$. Ici, $t_5$ correspond à la fin de la mesure du flux de gaz et $t_1$ correspond par exemple à la valeur de t à partir de laquelle les valeurs de $J_{mesure\_perm}$ sont inférieures à la somme de la première valeur mesurée de $J_{mesure\_perm}$ et du double de l'écart type des 30 premières valeurs mesurées de $J_{mesure\_perm}$. Les intervalles de temps de ces quatre parties correspondent à des durées approximativement égales entre elles. L'erreur de chacune de ces quatre parties est alors calculée comme exposé ci-dessus selon l'équation (20), en calculant l'intégrale de la différence entre l'estimation et la mesure du flux de gaz. Les erreurs des paramètres A et B sont alors calculées en combinant les différentes erreurs calculées pour les différentes parties des courbes telles que par exemple :

$$ErreurB = \int_{t\in[t1;t2]}\left(J_{estim\_perm}(t)-J_{mesure\_perm}\right)+2\int_{t\in[t2;t3]}\left(J_{estim\_perm}(t)-J_{mesure\_perm}\right)$$
$$+3\int_{t\in[t3;t4]}\left(J_{estim\_perm}(t)-J_{mesure\_perm}\right) \qquad (25)$$

$$ErreurA = 2\int_{t\in[t4;t5]}\left(J_{estim\_perm}(t)-J_{mesure\_perm}\right)+\int_{t\in[t3;t4]}\left(J_{estim\_perm}(t)-J_{mesure\_perm}\right) \qquad (26)$$

Par rapport aux deux premières variantes précédemment décrites, cette troisième variante de calcul des erreurs d'estimation des paramètres A et B est plus polyvalente et s'adapte mieux même lorsque le signal de mesure diverge du modèle théorique de Fick.

Les trois variantes de calcul des erreurs des paramètres A et B sont des exemples de réalisation, et d'autres combinaisons linéaires des erreurs des différentes parties des courbes de mesure et d'estimation du flux de gaz peuvent être réalisées pour calculer ErreurA et ErreurB. Comme lors de l'estimation du bruit de fond, il est possible de considérer des parties de courbes se chevauchant en partie les unes sur les autres.

Une fois ces calculs d'erreurs effectués, les valeurs des paramètres A et B sont modifiées en leur ajoutant ou soustrayant leur « pas » respectif en fonction de la valeur de l'erreur d'estimation du paramètre (étape 106.4). Si l'erreur du paramètre (ErreurA ou ErreurB) est négative, cela signifie que la valeur estimée du paramètre est trop petite, et donc que la valeur estimée du paramètre correspondant doit être augmentée. Inversement, si l'erreur du paramètre est positive, cela signifie que la valeur estimée du paramètre est trop grande et donc que la valeur estimée du paramètre doit être réduite. La valeur du pas de chaque paramètre est par exemple comprise entre environ $1.10^{-25}$ et $1.10^{-6}$.

A l'étape 106.5, la stabilisation des valeurs des paramètres A et B est ensuite évaluée en analysant la variation des paramètres A et B par rapport à l'estimation précédente. En effet, si les valeurs de ces paramètres se stabilisent, cela signifie que le modèle choisi correspond bien à la mesure et que l'estimation réalisée du flux de gaz est alors fiable. On considère par exemple que les valeurs des paramètres A et B sont stabilisées lorsque les valeurs de ces paramètres comportent au moins six premiers chiffres, en notation scientifique, identiques à ceux des valeurs de ces paramètres obtenues lors d'une précédente estimation. Si les valeurs des paramètres A et B ne sont pas stabilisées, les étapes 106.2 à 106.5 sont répétées jusqu'à obtenir une stabilisation de ces paramètres. Parallèlement à cette répétition de ces étapes, on continue la mesure du flux de gaz (étape 104) afin de continuer de prendre en compte les derniers points de mesure du flux de gaz dans l'estimation du flux de gaz.

Lorsque les valeurs des paramètres A et B sont considérées comme stables, l'estimation du flux de gaz $J_{estim\_perm}(t)$ obtenue à partir des valeurs estimées de A et B est comparée de manière globale à $J_{mesure\_perm}$ afin de déterminer si cette estimation est satisfaisante (étape 106.6). Afin de quantifier la justesse de cette estimation, celle-ci peut être définie comme étant l'inverse d'une erreur globale entre le flux de gaz estimé $J_{estim\_perm}(t)$ et la mesure du flux de gaz $J_{mesure\_perm}$. Ainsi, plus l'erreur globale calculée est faible, plus l'estimation du flux de gaz est juste. Cette erreur globale peut être définie comme étant la somme rapportée à chaque point de la différence au carré entre la mesure et l'estimation telle que :

$$ErrGlobJ_{perm} = \frac{1}{p}\sum_{i=1}^{p}\left(J_{mesure\_perm}(i) - J_{estim\_perm}(i)\right)^2 \qquad (27)$$

avec p correspondant au nombre de points pris en compte, par exemple égal au nombre de points de mesure du flux de gaz.

Il est possible de réduire l'influence de l'offset selon l'axe Y de la mesure (offset sur l'axe de la valeur de la pression) en début de mesure en calculant l'erreur globale selon l'équation :

$$ErrGlobJ_{perm} = \frac{1}{p-a}\sum_{i=a}^{p}\left(J_{mesure\_perm}(i) - J_{estim\_perm}(i)\right)^2 \qquad (28)$$

avec a représentant le début de la croissance du signal $J_{mesure\_perm}$, par exemple le point à partir duquel la valeur du signal de mesure $J_{mesure\_perm}$ dépasse la moyenne des premiers points de mesure sommée à l'écart type associé, par exemple sur environ 10 points de mesure.

Le dispositif servant à la mise en œuvre de ce procédé peut afficher de manière continue les valeurs estimées des paramètres A, B, le paramètre d'erreur globale ainsi que la valeur du flux stabilisé et du Time lag estimés sur la base des valeurs estimées de A et B, calculés sur la base des équations (29) et (30) indiquées plus loin.

Si l'adéquation entre la simulation et la mesure du flux de gaz est considérée comme suffisante, c'est-à-dire si l'erreur globale précédemment calculée est inférieure à un seuil $Y_{perm}$, par exemple compris entre 0 et 5%, la fin de la mesure du flux de gaz peut être anticipée, les valeurs estimées des paramètres A et B étant alors considérées comme bonnes. A partir des paramètres précédemment estimés, on peut donc évaluer la perméation de la couche barrière 10 (étape 108) en calculant par exemple la valeur du flux de gaz stabilisé J∞ tel que :

$$J\infty = A.B \qquad (29)$$

et/ou le paramètre TL (Time lag) tel que :

$$TL = \frac{B}{6}. \qquad (30)$$

Outre les valeurs de J∞ et TL, il est possible de calculer les valeurs de D (coefficient de diffusion) et S (solubilité) de la couche barrière à partir des valeurs estimées de A et B, conformément aux équations précédemment décrites.

Si l'adéquation entre l'estimation et la mesure du flux de gaz n'est pas considérée comme suffisante, c'est-à-dire si l'erreur globale indiquée ci-dessus est supérieure à un seuil $Y_{perm}$, il est alors possible de considérer que le flux de gaz suit une première équation $J_{estim\_perm\_1}(t)$, basée sur les valeurs des paramètres A et B calculés et appelés $A_1$ et $B_1$, sur une première plage de valeurs de t, et que ce flux de gaz suit également une ou plusieurs autres équations $J_{estim\_perm\_X}(t)$ s'additionnant à la première équation $J_{estim\_perm\_1}(t)$, basée sur des paramètres $A_X$ et $B_X$ différents de $A_1$ et $B_1$, sur une deuxième plage de valeurs de t.

En effet, certaines couches barrières peuvent comporter plusieurs régimes de perméation correspondant chacun à un modèle de Fick régi par ses propres paramètres A et B. Dans ce cas, le modèle du flux de gaz à travers la couche barrière peut s'exprimer par l'équation :

$$J_{estim\_perm\_total}(t) = \sum_{i=1}^{m} J_{estim\_perm\_i}(t) \qquad (31)$$

où m est alors le nombre de régimes de perméation de la couche barrière.

Ces m régimes de perméation s'additionnent. Il convient donc de déterminer à quel moment le régime de perméation change de sorte qu'un nouveau régime doit être ajouté à $J_{estim\_perm\_total}(t)$. Ce moment est déterminé par le suivi de l'erreur globale précédemment calculée. Afin de déterminer au mieux la somme de plusieurs régimes de perméation, l'erreur globale précédemment décrite peut être définie par l'équation suivante :

$$ErrGlobJ_{perm} = \frac{1}{p} \sum_{i=1}^{p} \frac{J_{mesure\_perm}(i) - J_{estim\_perm}(i)}{J_{mesure\_perm}(i)} \qquad (32)$$

La figure 11 représente un exemple d'évolution de l'erreur globale calculée en considérant que le flux de gaz est régi par une seule équation de Fick alors que le régime de perméation réel de la couche barrière est composé de la somme de plusieurs régimes de perméation distincts. On voit sur cette figure que l'erreur globale est stable jusqu'à environ la 20000ème seconde, puis l'erreur globale augmente. Cela est dû au fait que l'influence d'un nouveau régime de perméation se fait sentir à ce moment là et s'ajoute au premier régime de perméation.

Pour pouvoir obtenir les paramètres A et B de l'ensemble des régimes de perméation, les paramètres du premier régime de perméation, appelé $J_{perm\_1}$, sont fixés lorsque l'erreur commence à augmenter. Il est ainsi possible de soustraire le premier régime de perméation à la mesure pour faire apparaitre un nouveau signal ne dépendant que du ou des prochains régimes de perméation $J_{perm\_X}$, avec X nombre entier supérieur à 1. Ce signal pourra être ainsi traité de la même manière que la mesure pour en extraire les autres régimes de perméation.

La détermination de $A_1$ et $B_1$, permettant de déterminer $J_{perm\_1}$, utilise les données estimées juste avant que l'erreur globale n'augmente de plus de 30% du point considéré pendant une durée suffisamment longue (1H30 par exemple, ou plus dans le cas de fortes propriétés barrières, comme une journée ou plus). Les étapes 106.2 à 106.5 sont mises en œuvre uniquement à partir de ces données jusqu'à obtenir des valeurs stabilisées de $A_1$ et $B_1$.

Du fait qu'à l'étape 106.6 le paramètre d'erreur globale est supérieure au seuil $Y_{perm}$, l'étape 106.7 est alors mise en œuvre et consiste à la mise en œuvre d'étapes similaires aux étapes 106.2 à 106.5 (de manière itérative comme précédemment décrit) en soustrayant à la mesure le ou les précédents régimes de perméation pour extraire et déterminer les régimes de perméation suivants.

Ainsi, selon un exemple d'une courbe de flux de gaz suivant plusieurs régimes de perméation, il est possible d'avoir un premier régime de perméation $J_{perm\_1}$ dont l'influence débute dès le début de la mesure, un deuxième régime de perméation $J_{perm\_2}$ dont l'influence commence à partir de la 20000ème seconde, un troisième régime de perméation $J_{perm\_3}$ dont l'influence commence à partir de la 30000ème seconde, et un quatrième régime de perméation $J_{perm\_4}$ dont l'influence commence ici à partir de la 50000ème seconde. Chacun des régimes de perméation est régi par sa propre équation de Fick et comporte donc ses propres paramètres A et B caractérisant le flux de gaz dans la période du régime de perméation considérée.

Lorsque plusieurs régimes de perméation sont pris en considération, l'étape 108 consiste alors à calculer, à partir des équations 24 et 25 précédemment décrites, une valeur de flux stabilisé J∞ et de TL pour chaque régime de perméation.

A l'étape 106.4 précédemment décrite, il est possible de faire varier A et B par exemple selon un pas constant, ou bien un pas variable, c'est-à-dire une valeur multipliée par un coefficient propre à chaque paramètre et dont la valeur peut changer selon l'évolution de l'erreur sur les paramètres A et B.

Ainsi, ce coefficient sera par exemple divisé par 2 si le paramètre oscille entre deux valeurs, ce qui permet de gagner en précision sur le paramètre estimé. De la même manière, le coefficient sera par exemple augmenté d'environ 10 % si le paramètre évolue plusieurs fois d'affilées dans la même direction, ce qui permet d'améliorer la rapidité du début de l'estimation, lorsque les paramètres A et B estimés sont trop éloignés de leur valeurs finales.

Par exemple, à chaque itération de l'étape 106.4, pour le régime de perméation à estimer, la valeur de B peut être modifiée en ajoutant ou soustrayant un pas ∆B et la valeur de A peut être modifiée en ajoutant ou soustrayant un pas ∆A telles que :

- Si B évolue deux fois de suite dans le même sens, on peut augmenter par exemple ΔB de 10%.
- Si A évolue deux fois de suite dans le même sens, on peut augmenter par exemple ΔA de 10%.
- Si B et/ou A oscille autour de la même valeur, on peut diviser ΔA et/ou ΔB par 2.
- Dans les autres cas, ΔB et ΔA peuvent rester constants.

Il n'y a pas de limite dans le nombre de points de mesure du flux de gaz pouvant être utilisés. Toutefois, afin de réduire la charge de calcul, il est aussi possible de moyenner un signal de mesure trop long autour d'un nombre maximum de points (par exemple 2000).

Il peut arriver que les offsets en X (axe des temps) et Y (axe de la pression mesurée), appelés respectivement OffX et OffY, aient une importance pour que la meilleure estimation du flux de gaz corresponde à la mesure du flux de gaz, et cela autant pour le bruit de fond que pour la perméation. Pour obtenir le couple (offset X, offset Y) donnant une erreur globale la plus faible, les étapes 106.1 à 106.5 pour la perméation et/ou les étapes 102.1 à 102.6 pour le bruit de fond peuvent être répétées en décalant à chaque fois la courbe correspondant à la mesure du flux de gaz d'une faible unité le long de l'axe des temps (par exemple 1 seconde), cette boucle étant incluse dans une autre boucle réalisant un tel décalage de la mesure du flux de gaz le long de l'axe des ordonnées (par exemple de $1.10^{-15}$ Pa).

Dans ce cas, l'estimation de la perméation peut être exprimée par l'équation suivante :

$$J_{estim\_perm}(t) = 2A \sum_{n=1}^{n\,max} \left( \frac{B}{\pi(t-OffX)} \right)^{\frac{1}{2}} exp\left( \frac{-(2n+1)^2}{4B(t-OffX)} \right) + OffY \qquad (33)$$

L'estimation du bruit de fond peut être exprimée par l'équation suivante :

$$J_{estim\_deg\,as}(t) = P_{init} - 2A \sum_{n=1}^{n\,max} \left( \frac{B}{\pi(t-OffX)} \right)^{\frac{1}{2}} exp\left( \frac{-(2n+1)^2}{4B(t-OffX)} \right) + OffY \qquad (34)$$

Les valeurs de OffX et OffY considérées dans l'estimation du bruit de fond peuvent être décorrélées de celles considérées dans l'estimation de la perméation.

L'algorithme d'une correction d'offset de l'estimation du bruit de fond et/ou de la perméation peut correspondre à :

Pour a variant de $-Y_1$ à $Y_1$ par pas de $1.10^{-15}$,
Pour b variant de $-X_1$ à $X_1$ par pas de 1,

Déterminer l'estimation $J_{estim}(t)$ présentant l'erreur minimale avec le signal de mesure $J_{mesure}$ modifié de l'offset a sur l'axe des ordonnées et de l'offset b sur l'axe des abscisses,

Si l'erreur globale < erreur globale enregistrée, alors

Erreur globale enregistrée = erreur globale,
OffY = a
OffX = b

Fin Si
Fin pour
Fin pour

Dans cet algorithme, $Y_1$ peut correspondre à environ un dixième de l'amplitude attendue du signal $J_{mesure}$ attendu, et $X_1$ peut correspondre à environ un tiers de la durée de la mesure attendue.

L'estimation donnant l'erreur globale la plus faible est alors obtenue en utilisant OffY et OffX comme offsets sur les axes des ordonnées et des abscisses.

Ce calcul d'offset peut notamment être mis en œuvre pour chaque régime de perméation calculé lorsque le flux de gaz est estimé comme correspondant à une combinaison de plusieurs régimes de perméation.

Dans les exemples précédemment décrits, les lois de Fick sont utilisées comme modèles de prédiction de l'évolution du bruit de fond et du flux de gaz à travers la couche barrière 10. En variante, il est possible de corréler l'évolution du bruit de fond et du flux de gaz à des données, c'est-à-dire des courbes, par exemple obtenues par apprentissage ou correspondant à une bibliothèque fournie, par exemple stockées dans une base de données d'apprentissage, et conformes aux équations du flux de gaz spécifiées dans la revendication 1. Chacune de ces courbes est par exemple associée à des valeurs des paramètres A et B ou éventuellement directement à des valeurs des paramètres J∞ et TL. A chaque itération du procédé mise en œuvre pour améliorer la correspondance entre la mesure et l'estimation (l'estimation du flux du gaz $J_{estim\_perm}(t)$ correspond dans ce cas à l'une des courbes de la base de données), on réduit l'erreur d'estimation entre la mesure et l'estimation en choisissant la courbe qui correspond le mieux aux mesures réalisées. Au final, la courbe de la base de données qui correspond le mieux aux mesures (bruit de fond et/ou flux de gaz) réalisées est choisie comme celle correspondant au modèle de perméation de la couche barrière 10.

Les valeurs de A et B de la courbe choisie peuvent alors être considérées comme correspondant à celles de la couche barrière 10, et à partir desquels il est possible de calculer les paramètres J∞ et TL pour estimer la perméation de la couche barrière 10. De la même manière, plusieurs courbes peuvent être choisies dans le cas d'une perméation régie par plusieurs régimes de perméation.

Dans le mode de réalisation précédemment décrit, on réalise tout d'abord une estimation de l'évolution du bruit de fond, puis les paramètres A et B sont estimés via l'estimation de l'évolution du flux de gaz à travers la couche barrière 10, ces paramètres A et B estimés étant ensuite utilisés pour estimer la perméation de la couche barrière 10 via le calcul du J∞ et éventuellement du TL. En variante, il est possible de prendre en compte à la fois les paramètres A et B, appelés par exemple $A_{degas}$ et $B_{degas}$, estimés lors de l'estimation du bruit de fond pour calculer un premier taux de transfert stabilisé, et les paramètres A et B, appelés par exemple $A_{perm}$ et $B_{perm}$, estimés lors de l'estimation de l'évolution du flux de gaz pour calcul un deuxième taux de transfert stabilisé.

Dans un autre mode de réalisation, le procédé d'estimation de la perméation de la couche barrière 10 peut consister à mettre en œuvre les étapes 102.1 à 102.7 comme précédemment décrit afin d'obtenir une estimation des valeurs des paramètres A et B via l'estimation de l'évolution du bruit de fond. A partir de ces valeurs de A et B, il est possible de calculer directement le J∞ et éventuellement le TL afin d'estimer la perméation de la couche barrière 10, sans mettre en œuvre les étapes 104 à 108. Cet autre mode de réalisation est de préférence mis en œuvre dans le cas d'une couche barrière saturée en gaz cibles. Dans ce cas, la première chambre 12 est de préférence inexistante ou l'accès entre la première et la deuxième chambre est bloqué de manière étanche, afin d'éviter une désorption de la couche barrière hors de la deuxième chambre. Lorsque plusieurs régimes de dégazage sont pris en considération, il est possible de calculer une valeur de flux stabilisé J∞ et de TL pour chaque régime de dégazage identifié.

Dans un autre mode de réalisation, le procédé d'estimation de la perméation de la couche barrière 10 peut consister à mettre en œuvre les étapes 104 à 108 comme précédemment décrit sans mettre en œuvre avant l'étape 102, c'est-à-dire sans réaliser une estimation de l'évolution du bruit de fond. Dans ce cas, le bruit de fond n'est pas soustrait à la mesure du flux de gaz à travers la couche barrière 10 réalisée. Bien que moins précis et présentant une sensibilité de mesure moindre que lorsque le bruit de fond est pris en considération, un tel mode de réalisation a toutefois pour avantage d'être rapide et adapté à un grand nombre de couches barrières.

Quelque soit le mode de réalisation considéré, lorsque plusieurs régimes de perméation et/ou plusieurs régimes de dégazage sont considérés, il est possible de réaliser le calcul d'un flux de gaz stabilisé J∞₁ tel que $J\infty_1 = A_1.B_1$ et/ou

$$J\infty_X = \sum_{i=1}^{X} A_i.B_i$$

le calcul de flux de gaz stabilisés J∞_X tel que												où X représente le numéro du régime dont on souhaite connaître la perméation, dans le cas de plusieurs régimes de perméation qui s'additionnent.

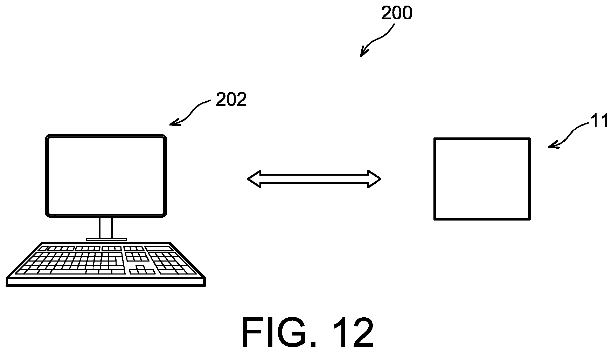

Le procédé d'estimation de la perméation de la couche barrière 10 peut être mis en œuvre par un dispositif d'estimation de perméation 200 tel que représenté par exemple sur la figure 12. Le dispositif 200 comporte le perméamètre 11 précédemment décrit, ainsi qu'un ou plusieurs ordinateurs 202, ou unités de calcul, aptes à former une interface d'entrées / sorties avec l'opérateur. Le ou les ordinateurs 202 sont reliés au perméamètre 11 afin notamment de piloter le perméamètre 11, recevoir les signaux de mesures délivrés par le dispositif de mesure 16 du perméamètre 11, réaliser l'ensemble des calculs du procédé, etc.

**Revendications**

1.	Procédé d'estimation d'au moins un flux d'un gaz (18) dans une enceinte (14) maintenue dans un régime de dépression vis-à-vis de ce gaz, le régime de dépression étant maintenu de façon permanente tel que l'évolution de la pression partielle du gaz dans l'enceinte correspond à un équilibre entre un système réalisant ce régime de dépression, qui est stabilisé, et le flux du gaz dans l'enceinte, et qu'une mesure de l' évolution de la pression partielle du gaz (18) dans l'enceinte (14) correspond et permet d'obtenir le flux du gaz (18) dans l'enceinte (14), le procédé comportant au moins :

	- une mesure (104), en fonction du temps, d'un flux du gaz $J_{mesure}$ dans l'enceinte maintenue dans un régime de dépression vis-à-vis du gaz, et

- une estimation (102.3 - 102.6, 106) de valeurs de paramètres A et B mise en œuvre de manière itérative en réduisant une erreur d'estimation basée sur une différence entre une estimation du flux du gaz $J_{estim}(t)$ et le flux du gaz mesuré $J_{mesure}$, dans lequel, lorsque le flux du gaz mesuré $J_{mesure}$ correspond à une montée en pression du gaz dans l'enceinte, l'estimation du flux du gaz $J_{estim}(t)$ est calculée selon l'équation :

$$J_{estim}(t) = 2A \sum_{n=1}^{n\,max} \left( \frac{B}{\pi(t - OffX)} \right)^{\frac{1}{2}} exp\left( \frac{-(2n+1)^2}{4B(t - OffX)} \right) + OffY$$

et lorsque le flux du gaz mesuré $J_{mesure}$ correspond à une baisse de

pression du gaz dans l'enceinte, l'estimation du flux du gaz $J_{estim}(t)$ est calculée selon l'équation :

$$J_{estim}(t) = P_{init} - 2A \sum_{n=1}^{n\,max} \left( \frac{B}{\pi(t - OffX)} \right)^{\frac{1}{2}} exp\left( \frac{-(2n+1)^2}{4B(t - OffX)} \right) + OffY \,,$$

avec OffX et OffY : nombres entiers relatifs dont les valeurs sont fixes lors des étapes d'estimation des paramètres A et B ;

$P_{init}$ : première valeur mesurée du flux du gaz $J_{mesure}$;
$n_{max}$ : nombre entier supérieur ou égal à 1 ;

dans lequel l'estimation des valeurs des paramètres A et B comporte au moins la mise en œuvre des étapes suivantes :

$a_1$) choix (106.1) de valeurs initiales des paramètres A et B ;
$b_1$) calcul (106.2) de l'estimation du flux de gaz $J_{estim}(t)$ ;
$c_1$) calcul (106.3) de l'erreur d'estimation ;
$d_1$) lorsque l'erreur d'estimation est positive, réduction de la valeur du paramètre A et/ou de la valeur du paramètre B, et lorsque l'erreur d'estimation est négative, augmentation de la valeur du paramètre A et/ou de la valeur du paramètre B (106.4) ;
et dans lequel la mise en œuvre des étapes $b_1$) à $d_1$) est répétée plusieurs fois successivement jusqu'à atteindre une stabilisation des valeurs estimées des paramètres A et B (106.5).

2. Procédé selon la revendication 1, dans lequel le gaz est choisi parmi la vapeur d'eau, l'oxygène, un des isotopes de l'eau ou de l'oxygène, l'hélium, l'hydrogène, ou un mélange d'au moins deux desdits gaz.

3. Procédé selon l'une des revendications précédentes, dans lequel l'étape $c_1$) (106.3) comporte la mise en œuvre des étapes suivantes :

- division de $J_{estim}(t)$ et $J_{mesure}$ en plusieurs parties (60.1 - 60.4; 62. 1 - 62.4) telles que chacune de ces parties corresponde à $J_{estim}(t)$ et $J_{mesure}$ pour un intervalle de durée distinct des intervalles de durée des autres parties ;
- pour chacune des parties de $J_{estim}(t)$ et $J_{mesure}$, calcul d'un paramètre

$$ErreurJ_{partie\_i} = \int_{t \in partie\_i} (J_{estim}(t) - J_{mesure}),$$

avec partie_i correspondant à l'intervalle de durée des parties correspondantes de $J_{estim}(t)$ et $J_{mesure}$ ;
- calcul de paramètres ErreurA et ErreurB, correspondant respectivement aux erreurs d'estimation des paramètres A et B et formant ensemble l'erreur d'estimation, chacun des paramètres ErreurA et ErreurB étant égal à une combinaison linéaire des paramètres $ErreurJ_{partie\_i}$ ;

et dans lequel l'étape $d_1$) (106.4) est mise en œuvre telle que :

- lorsque la valeur du paramètre ErreurA est positive, la valeur du paramètre A est réduite ;

- lorsque la valeur du paramètre ErreurA est négative, la valeur du paramètre A est augmentée ;
- lorsque la valeur du paramètre ErreurB est positive, la valeur du paramètre B est réduite ;
- lorsque la valeur du paramètre ErreurB est négative, la valeur du paramètre B est augmentée.

**4.** Procédé selon l'une des revendications précédentes, dans lequel une stabilisation des valeurs des paramètres A et B est atteinte (106.5) lorsque les valeurs des paramètres A et B comportent au moins six premiers chiffres, en notation scientifique, identiques à ceux des valeurs des paramètres A et B obtenues lors d'une précédente mise en œuvre des étapes $b_1$) à $d_1$).

**5.** Procédé selon l'une des revendications précédentes, dans lequel les valeurs des paramètres A et B sont réduites ou augmentées d'un pas variable dont la valeur dépend de précédentes réductions ou augmentations des valeurs des paramètres A et B.

**6.** Procédé selon l'une des revendications précédentes, dans lequel l'estimation des valeurs des paramètres A et B (106) est mise en œuvre plusieurs fois en considérant, à chacune de ces estimations, des valeurs différentes du paramètre OffX et/ou du paramètre OffY, et dans lequel des valeurs finales des paramètres A et B sont choisies comme étant celles pour lesquelles une erreur globale entre le flux de gaz mesuré $J_{mesure}$ et l'estimation du flux de gaz $J_{estim}(t)$ est minimale parmi l'ensemble des étapes d'estimation des valeurs des paramètres A et B mises en œuvre.

**7.** Procédé selon l'une des revendications précédentes, dans lequel, lorsqu'une erreur globale entre le flux de gaz mesuré $J_{mesure}$ et l'estimation du flux de gaz $J_{estim}(t)$ atteint une valeur minimale à un instant $t_X$ et est supérieure à cette valeur minimale après $t_X$, une nouvelle estimation (106.7) de valeurs de paramètres $A_X$ et $B_X$, correspondant aux paramètres A et B pour $t > t_X$, est mise en œuvre, dans laquelle les valeurs des paramètres $A_X$ et $B_X$ sont estimées de manière itérative en réduisant une erreur d'estimation basée sur une différence, pour $t > t_X$, entre une estimation du flux de gaz $J_{estim\_X}(t)$ calculée sur la base des valeurs estimées des paramètres $A_X$ et $B_X$ et le flux de gaz mesuré $J_{mesure}$ auquel est soustrait l'estimation du flux de gaz $J_{estim}(t)$ pour $t < t_X$, avec X nombre entier supérieur à 1, et dans lequel les paramètres A et B précédemment calculés sont appelés $A_1$ et $B_1$.

**8.** Procédé selon l'une des revendications précédentes, dans lequel l'enceinte maintenue dans un régime de dépression vis-à-vis du gaz correspond à une deuxième chambre d'un perméamètre (11) qui comprend en outre une première chambre (12) et un dispositif de mesure (16) du gaz présent dans la deuxième chambre, la première et la deuxième chambre étant séparées l'une de l'autre par une couche barrière (10) présentant une perméation vis-à-vis du gaz, et dans lequel le flux de gaz mesuré $J_{mesure}$ est obtenu à partir d'une mesure de l'évolution de la pression partielle du gaz dans la deuxième chambre.

**9.** Procédé selon la revendication 8, dans lequel, lors de la mise en œuvre des étapes de mesure du flux du gaz $J_{mesure}$ et d'estimation des valeurs de paramètres A et B, la couche barrière est saturée en gaz, et dans lequel le flux de gaz mesuré $J_{mesure}$ correspond à une baisse de pression du gaz dans la deuxième chambre du perméamètre.

**10.** Procédé selon la revendication 9, comportant en outre, après l'estimation des valeurs des paramètres A et B, le calcul d'un flux de gaz stabilisé $J\infty$ tel que $J\infty = A.B$ ou, lorsqu'une estimation de valeurs de paramètres $A_X$ et $B_X$ est mise en œuvre, le calcul de flux de gaz stabilisés $J\infty_X$ tel que $J\infty_X = A_X.B_X$.

**11.** Procédé d'estimation d'une perméation d'une couche barrière (10) vis-à-vis d'au moins un gaz (18), dans lequel la couche barrière (10) sépare une première chambre (12) et une deuxième chambre (14) d'un perméamètre (11), comportant au moins :

- mise en dépression de la première chambre et de la deuxième chambre vis-à-vis du gaz ;
- première mise en œuvre d'un procédé d'estimation d'un flux de gaz selon la revendication 8 tel que le flux de gaz mesuré, appelé $J_{mesure\_degas}$, correspond à une baisse de pression du gaz dans la deuxième chambre ;
- calcul d'une estimation d'un flux de gaz $J_{estim\_degas}(t)$ à partir de dernières valeurs des paramètres A et B précédemment estimées lors de la première mise en œuvre du procédé d'estimation d'un flux de gaz ;
- introduction du gaz dans la première chambre telle que la pression partielle du gaz dans la première chambre soit supérieure à celle dans la deuxième chambre ;
- deuxième mise en œuvre d'un procédé d'estimation d'un flux de gaz selon la revendication 8 tel que le flux de gaz mesuré $J_{mesure}$, correspond à une montée en pression du gaz dans la deuxième chambre, et au cours duquel l'estimation de valeurs de paramètres A et B est réalisée en réduisant l'erreur d'estimation basée sur une différence entre une estimation du flux du gaz $J_{estim\_perm}(t)$ et un autre flux de gaz $J_{mesure\_perm}$ tel que $J_{mesure\_perm} = J_{mesure} - J_{estim\_degas}(t)$.

12. Procédé selon la revendication 11, dans lequel, lorsqu'une erreur globale entre le flux de gaz mesuré $J_{mesure\_degas}$ et l'estimation du flux de gaz $J_{estim\_degas}(t)$ est inférieure à la valeur d'un premier seuil $Y_{degas\_inf}$, l'estimation du flux de gaz $J_{estim\_degas}(t)$ est soustraite des valeurs du flux de gaz mesuré $J_{mesure}$ lors de la deuxième mise en œuvre du procédé d'estimation du flux de gaz et, lorsque l'erreur globale entre le flux de gaz mesuré $J_{mesure\_degas}$ et l'estimation $J_{estim\_degas}(t)$ est supérieure à la valeur d'un deuxième seuil $Y_{degas\_sup}$, une dernière valeur mesurée du flux de gaz $J_{mesure\_degas}$ ou une moyenne de plusieurs dernières valeurs mesurées du flux de gaz $J_{mesure\_degas}$ est soustraite des valeurs du flux de gaz mesuré $J_{mesure}$ lors de la deuxième mise en œuvre du procédé d'estimation du flux de gaz.

13. Procédé selon l'une des revendications 11 ou 12, comportant en outre, après l'estimation des valeurs des paramètres A et B au cours de la deuxième mise en œuvre d'un procédé d'estimation d'un flux de gaz, le calcul d'un flux de gaz stabilisé $J\infty$ tel que $J\infty = A.B$ ou, lorsqu'une estimation de valeurs de paramètres $A_X$ et $B_X$ est mise en œuvre au cours de la deuxième mise en œuvre d'un procédé d'estimation d'un flux de gaz, le calcul de flux de gaz stabilisés $J\infty_X$ tel que $J\infty_X = A_X.B_X$.

14. Dispositif (200) d'estimation d'une perméation d'une couche barrière (10), comportant des moyens (202, 11) adaptés à mettre en œuvre d'un procédé d'estimation de la perméation de la couche barrière (10) selon l'une des revendications 11 à 13.

**Patentansprüche**

1. Verfahren zum Abschätzen zumindest einer Strömung von Gas (18) in einem Raum (14), der in Bezug auf dieses Gas in Unterdruckbetrieb gehalten wird, wobei der Unterdruckbetrieb permanent aufrechterhalten wird, so dass der Verlauf des Partialdrucks von Gas im Raum einem Gleichgewicht entspricht, das zwischen einem System, bei dem dieser Unterdruckbetrieb erfolgt und stabilisiert wird, und der Gasströmung in dem Raum besteht, und dass eine Messung des Verlaufs des Partialdrucks von Gas (18) im Raum (14) der Strömung von Gas (18) im Raum (14) entspricht und ermöglicht, diese zu erhalten,
wobei das Verfahren zumindest umfasst:

- eine Messung (104), als Funktion der Zeit, einer Gasströmung $J_{mesure}$ in dem Raum, der in Bezug auf das Gas in Unterdruckbetrieb gehalten wird, und
- eine Schätzung (102.3 - 102.6, 106) von Werten der Parameter A und B, die iterativ durch Verringern eines Schätzfehlers auf der Grundlage einer Differenz zwischen einer Schätzung der Gasströmung $J_{estim}(t)$ und der gemessenen Gasströmung $J_{mesure}$ erfolgt;

und wobei dann, wenn die gemessene Gasströmung $J_{mesure}$ einem Druckanstieg von Gas im Raum entspricht, die Schätzung der Gasströmung $J_{estim}(t)$ berechnet wird gemäß der Gleichung:

$$J_{estim}(t) = 2A \sum_{n=1}^{n\,max} \left(\frac{B}{\pi(t - OffX)}\right)^{\frac{1}{2}} \exp\left(\frac{-(2n+1)^2}{4B(t - OffX)}\right) + \text{OffY}$$

und wobei dann, wenn die gemessene Gasströmung $J_{mesure}$ einem Druckabfall von Gas im Raum entspricht, die Schätzung der Gasströmung $J_{estim}(t)$ berechnet wird gemäß der Gleichung:

$$J_{estim}(t) = P_{init} - 2A \sum_{n=1}^{n\,max} \left(\frac{B}{\pi(t - OffX)}\right)^{\frac{1}{2}} \exp\left(\frac{-(2n+1)^2}{4B(t - OffX)}\right) + \text{OffY}$$

worin OffX und OffY relative ganze Zahlen sind, deren Werte bei den Schritten des Schätzens der Parameter A und B fest sind;
$P_{init}$ der erste Messwert der Gasströmung $J_{mesure}$ ist;

$n_{max}$ eine ganze Zahl größer oder gleich 1 ist;
wobei die Schätzung der Werte der Parameter A und B zumindest das Ausführen der folgenden Schritte umfasst:

$a_1$) Auswählen (106.1) von Anfangswerten der Parameter A und B;
$b_1$) Berechnen (106.2) der Schätzung der Gasströmung $J_{estim}(t)$;
$c_1$) Berechnen (106.3) des Schätzfehlers;
$d_1$) wenn der Schätzfehler positiv ist, Verringern des Wertes von Parameter A und/oder des Wertes von Parameter B, und wenn der Schätzfehler negativ ist,
Erhöhen des Wertes von Parameter A und/oder des Wertes von Parameter B (106.4);
und wobei das Ausführen der Schritte $b_1$) bis $d_1$) mehrere Male nacheinander wiederholt wird, bis eine Stabilisierung der geschätzten Werte der Parameter A und B erreicht ist (106.5).

2. Verfahren nach Anspruch 1, wobei das Gas ausgewählt ist aus Wasserdampf, Sauerstoff, einem der Isotope von Wasser oder Sauerstoff, Helium, Wasserstoff oder einem Gemisch aus zumindest zwei der genannten Gase.

3. Verfahren nach einem der vorhergehenden Ansprüche, wobei der Schritt $c_1$) (106.3) das Ausführen der folgenden Schritte umfasst:

- Unterteilen von $J_{estim}(t)$ und $J_{mesure}$ in mehrere Teile (60.1 - 60.4; 62.1 - 62.4), so dass jeder dieser Teile für ein Zeitintervall, das sich von den Zeitintervallen der anderen Teile unterscheidet, $J_{estim}(t)$ und $J_{mesure}$ entspricht;
- für jeden der Teile von $J_{estim}(t)$ und $J_{mesure}$ Berechnen eines Fehlerparameters $ErreurJ_{partie\_i} = \int_{t \in partie\_i} (J_{estim(t)} - J_{mesure})$, wobei partie_i dem Zeitintervall der entsprechenden Teile von $J_{estim}(t)$ und $J_{mesure}$ entspricht;
- Berechnen der Parameter ErreurA und ErreurB, die jeweils den Schätzfehlern der Parameter A und B entsprechen und zusammen den Schätzfehler bilden, wobei jeder der Parameter ErreurA und ErreurB gleich einer linearen Kombination der Parameter $ErreurJ_{partie\_i}$ ist;

und wobei Schritt $d_1$) (106.4) so ausgeführt wird, dass:

- dann, wenn der Wert des Parameters ErreurA positiv ist, der Wert des Parameters A verringert wird;
- dann, wenn der Wert des Parameters ErreurA negativ ist, der Wert des Parameters A erhöht wird;
- dann, wenn der Wert des Parameters ErreurB positiv ist, der Wert des Parameters B verringert wird;
- dann, wenn der Wert des Parameters ErreurB negativ ist, der Wert des Parameters B erhöht wird.

4. Verfahren nach einem der vorhergehenden Ansprüche, wobei eine Stabilisierung der Werte der Parameter A und B dann erreicht wird (106.5), wenn die Werte der Parameter A und B zumindest sechs erste Ziffern in wissenschaftlicher Notation enthalten, die mit denen der Werte der Parameter A und B identisch sind, die bei einer vorherigen Ausführung der Schritte $b_1$) bis $d_1$) erhalten wurden.

5. Verfahren nach einem der vorhergehenden Ansprüche, wobei die Werte der Parameter A und B um einen variablen Schritt verringert oder erhöht werden, dessen Wert von vorherigen Verringerungen oder Erhöhungen der Werte der Parameter A und B abhängt.

6. Verfahren nach einem der vorhergehenden Ansprüche, wobei die Schätzung der Werte der Parameter A und B (106) mehrmals durchgeführt wird, wobei bei jeder dieser Schätzungen unterschiedliche Werte des Parameters OffX und/oder des Parameters OffY berücksichtigt werden, und wobei die endgültigen Werte der Parameter A und B als diejenigen gewählt werden, für die ein Gesamtfehler zwischen der gemessenen Gasströmung $J_{mesure}$ und der Schätzung der Gasströmung $J_{estim}(t)$ unter allen ausgeführten Schritten der Schätzung der Werte der Parameter A und B minimal ist.

7. Verfahren nach einem der vorhergehenden Ansprüche, wobei dann, wenn ein Gesamtfehler zwischen der gemessenen Gasströmung $J_{mesure}$ und der Schätzung der Gasströmung $J_{estim}(t)$ zu einem Zeitpunkt $t_x$ einen Minimalwert erreicht und nach $t_x$ größer als dieser Minimalwert ist, eine neue Schätzung (106.7) von Parameterwerten $A_x$ und $B_x$, die den Parametern A und B bei $t > t_x$ entsprechen, durchgeführt wird, wobei die Parameterwerte $A_x$ und $B_x$ iterativ geschätzt werden durch Verringerung eines Schätzfehlers auf Grundlage einer Differenz bei $t > t_x$ zwischen einer Schätzung der Gasströmung $J_{estim\_x}(t)$, die auf der Grundlage der geschätzten Parameterwerte $A_x$ und $B_x$ berechnet wird, und der gemessenen Gasströmung $J_{mesure}$, von der die Schätzung der Gasströmung $J_{estim}(t)$ bei $t < t_x$ subtrahiert wird, wobei X eine ganze Zahl größer als 1 ist, und wobei die zuvor berechneten Parameter A und B als $A_1$ und $B_1$ bezeichnet werden.

**8.** Verfahren nach einem der vorhergehenden Ansprüche, wobei der in Bezug auf das Gas in Unterdruckbetrieb gehaltene Raum einer zweiten Kammer eines Permeameters (11) entspricht, das ferner eine erste Kammer (12) und eine Messvorrichtung (16) für das in der zweiten Kammer vorhandene Gas enthält, wobei die erste und die zweite Kammer durch eine Sperrschicht (10), die eine Permeation in Bezug auf das Gas aufweist, voneinander getrennt sind, und wobei die gemessene Gasströmung $J_{mesure}$ aus einer Messung des Verlaufs des Partialdrucks von Gas in der zweiten Kammer erhalten wird.

**9.** Verfahren nach Anspruch 8, wobei beim Ausführen der Schritte des Messens der Gasströmung $J_{mesure}$ und des Schätzens der Werte der Parameter A und B die Sperrschicht mit Gas gesättigt wird, und wobei die gemessene Gasströmung $J_{mesure}$ einem Druckabfall von Gas in der zweiten Kammer des Permeameters entspricht.

**10.** Verfahren nach Anspruch 9, ferner umfassend nach dem Schätzen der Werte der Parameter A und B das Berechnen einer stabilisierten Gasströmung J∞, so dass $J∞ = A.B$ oder, wenn eine Schätzung der Parameterwerte $A_x$ und $B_x$ durchgeführt wird, das Berechnen stabilisierter Gasströmungen J∞x, so dass $J∞x = A_X.B_X$.

**11.** Verfahren zum Schätzen einer Permeation einer Sperrschicht (10) in Bezug auf zumindest ein Gas (18), wobei die Sperrschicht (10) eine erste Kammer (12) und eine zweite Kammer (14) eines Permeameters (11) trennt, zumindest umfassend:

- Beaufschlagen der ersten Kammer und der zweiten Kammer mit Unterdruck in Bezug auf das Gas ;
- erstes Durchführen eines Verfahrens zum Schätzen einer Gasströmung nach Anspruch 8, so dass die gemessene Gasströmung, mit $J_{mesure\_degas}$ bezeichnet, einem Druckabfall von Gas in der zweiten Kammer entspricht;
- Berechnen einer Schätzung einer Gasströmung $J_{estim\_degas}(t)$ aus den letzten Werten der Parameter A und B, die zuvor während der ersten Durchführung des Verfahrens zum Schätzen einer Gasströmung geschätzt wurden;
- Einleiten von Gas in die erste Kammer, so dass der Partialdruck von Gas in der ersten Kammer größer ist als der in der zweiten Kammer;
- zweites Durchführen eines Verfahrens zum Schätzen einer Gasströmung nach Anspruch 8, so dass die gemessene Gasströmung $J_{mesure}$ einem Druckanstieg von Gas in der zweiten Kammer entspricht, und bei dem die Schätzung der Werte der Parameter A und B durch Verringern des Schätzfehlers auf der Grundlage einer Differenz zwischen einer Schätzung der Gasströmung $J_{estim\_perm}(t)$ und einer anderen Gasströmung $J_{mesure\_perm}$ erfolgt, so dass $J_{mesure\_perm} = J_{mesure} - J_{estim\_degas}(t)$.

**12.** Verfahren nach Anspruch 11, wobei dann, wenn ein Gesamtfehler zwischen der gemessenen Gasströmung $J_{mesure\_degas}$ und der Schätzung der Gasströmung $J_{estim\_degas}(t)$ kleiner als der Wert eines ersten Schwellenwerts $Y_{degas\_inf}$ ist, die Schätzung der Gasströmung $J_{estim\_degas}(t)$ von den Werten der gemessenen Gasströmung $J_{mesure}$ bei der zweiten Durchführung des Verfahrens zum Schätzen der Gasströmung subtrahiert wird und dann, wenn der Gesamtfehler zwischen der gemessenen Gasströmung $J_{mesure\_degas}$ und der Schätzung $J_{estim\_degas}(t)$ größer ist als der Wert eines zweiten Schwellenwerts $Y_{degas\_sup}$, ein zuletzt gemessener Wert der Gasströmung $J_{mesure\_degas}$ oder ein Mittelwert mehrerer zuletzt gemessener Werte der Gasströmung $J_{mesure\_degas}$ von den Werten der gemessenen Gasströmung $J_{mesure}$ bei der zweiten Durchführung des Verfahrens zum Schätzen der Gasströmung subtrahiert wird.

**13.** Verfahren nach einem der Ansprüche 11 oder 12, ferner umfassend, nach der Schätzung der Werte der Parameter A und B während der zweiten Durchführung eines Verfahrens zum Schätzen einer Gasströmung, das Berechnen einer stabilisierten Gasströmung J∞ derart, dass $J∞ = A.B$ oder, wenn eine Schätzung der Parameterwerte $A_x$ und $B_x$ während der zweiten Durchführung eines Verfahrens zum Schätzen einer Gasströmung erfolgt, das Berechnen stabilisierter Gasströmungen $J∞_X$ derart, dass $J∞_X = A_X.B_X$.

**14.** Vorrichtung (200) zum Schätzen einer Permeation einer Sperrschicht (10), enthaltend Mittel (202, 11) zum Durchführen eines Verfahrens zum Schätzen der Permeation der Sperrschicht (10) nach einem der Ansprüche 11 bis 13.

**Claims**

**1.** A method for estimating at least one flow of a gas (18) in an enclosure (14) maintained in a low pressure regimen relative to this gas, the low pressure regimen being maintained permanently such that the change over time of the partial pressure of the gas within the enclosure thus corresponds to a balance between a system making this low pressure regimen, which is stable, and that a measure of the change of the partial pressure of the gas (18) in the enclosure (14) corresponds and enables to obtain the flow of the gas (18) in the enclosure (14), the method comprising at least:

- measuring (104), as a function of time, a gas flow $J_{mesure}$ in the enclosure maintained in a low pressure regimen relative to the gas, and
- estimating (102.3 - 102.6, 106) values of parameters A and B iteratively implemented by decreasing an estimation error based on a difference between an estimation of the gas flow $J_{estim}(t)$ and the measured gas flow $J_{mesure}$,

wherein, when the measured gas flow $J_{mesure}$ corresponds to a pressure rise of the gas in the enclosure, the estimation of the gas flow $J_{estim}(t)$ is calculated according to the equation:

$$J_{estim}(t) = 2A \sum_{n=1}^{nmax} \left( \frac{B}{\pi(t - OffX)} \right)^{\frac{1}{2}} exp\left( \frac{-(2n+1)^2}{4B(t - OffX)} \right) + OffY$$

and when the measured gas flow $J_{mesure}$ corresponds to a pressure decrease of the gas in the enclosure, the estimation of the gas flow $J_{estim(t)}$ is calculated according to the equation:

$$J_{estim}(t) = P_{init} - 2A \sum_{n=1}^{nmax} \left( \frac{B}{\pi(t - OffX)} \right)^{\frac{1}{2}} exp\left( \frac{-(2n+1)^2}{4B(t - OffX)} \right) + OffY$$

with OffX and OffY: relative integers whose values are constant during the estimating of parameters A and B ;
$P_{init}$: first measured value of the gas flow $J_{mesure}$;
$n_{max}$: integer higher than or equal to 1;
wherein estimating the values of the parameters A and B includes at least the implementation of the following steps of:

$a_1$) choosing (106.1) initial values of the parameters A and B;
$b_1$) calculating (106.2) the estimation of the gas flow $J_{estim}(t)$;
$c_1$) calculating (106.3) the estimation error;
$d_1$) when the estimation error is positive, decreasing the value of the parameter A and/or the value of the parameter B, and when the estimation error is negative, increasing the value of the parameter A and/or the value of the parameter B (106.4);
and wherein the implementation of steps $b_1$) to $d_1$) is successively repeated several times until a stabilization of the estimated values of the parameters A and B (106.5) is achieved.

2. The method according to claim 1, wherein the gas is selected from water vapor, oxygen, one of the water or oxygen isotopes, helium, hydrogen, ora mixture of at least two of said gases.

3. The method according to one of preceding claims, wherein step $c_1$) (106.3) includes the implementation of the following steps of:

- dividing $J_{estim}(t)$ and $J_{mesure}$ into several parts (60.1 - 60.4; 62.1 - 62.4) such that each of these parts corresponds to $J_{estim}(t)$ and $J_{mesure}$ for a time interval distinct from the time intervals of the other parts;
- for each of the parts of $J_{estim}(t)$ and $J_{mesure}$, calculating a parameter $ErreurJ_{partie\_i} = \int_{t \in partie\_i}(J_{estim(t)} - J_{mesure})$, with partie_i corresponding to the time interval of the corresponding parts of Jestim(t) and $J_{mesure}$;
- calculating parameters ErreurA and ErreurB, corresponding to the estimation errors of the parameters A and B respectively and forming together the estimation error, each of the parameters ErreurA and ErreurB being equal to a linear combination of the parameters $ErreurJ_{partie\_i}$;

and wherein step $d_1$) (106.4) is implemented such that:

- when the value of the parameter ErreurA is positive, the value of the parameter A is decreased;

- when the value of the parameter ErreurA is negative, the value of the parameter A is increased;
- when the value of the parameter ErreurB is positive, the value of the parameter B is decreased;
- when the value of the parameter ErreurB is negative, the value of the parameter B is increased.

4. The method according to one of preceding claims, wherein a stabilization of the values of the parameters A and B is achieved (106.5) when the values of the parameters A and B include at least first six digits, in scientific notation, identical to those of the values of the parameters A and B obtained during a previous implementation of steps $b_1$) to $d_1$).

5. The method according to one of preceding claims, wherein the values of the parameters A and B are decreased or increased by a variable pitch the value of which depends on previous decreases or increases in the values of the parameters A and B.

6. The method according to one of the preceding claims, wherein the estimation of the values of the parameters A and B (106) is implemented several times by considering, at each of these estimations, different values of the parameter OffX and/or the parameter OffY, and wherein final values of the parameters A and B are chosen as being those for which a global error between the measured gas flow $J_{mesure}$ and the estimation of the gas flow $J_{estim}(t)$ is minimum among all the steps of estimating the values of the parameters A and B implemented.

7. The method according to one of the preceding claims, wherein, when a global error between the measured gas flow $J_{mesure}$ and the estimation of the gas flow $J_{estim}(t)$ reaches a minimum value at an instant $t_x$ and is higher than this minimum value after $t_x$, a new estimation (106.7) of values of parameters $A_x$ and $B_x$, corresponding to the parameters A and B for $t>t_x$, is implemented, wherein the values of the parameters $A_x$ and $B_x$ are iteratively estimated by decreasing an estimation error based on a difference, for $t > t_x$, between an estimation of the gas flow $J_{estim\_x}(t)$ calculated based on the estimated values of the parameters $A_x$ and $B_x$ and the measured gas flow $J_{mesure}$ from which is subtracted the estimation of the gas flow $J_{estim}(t)$ for $t < t_x$, with X an integer higher than 1, and wherein the previously calculated parameters A and B are designated $A_1$ and $B_1$.

8. The method according to one of the preceding claims, wherein the enclosure maintained in a low pressure regimen relative to the gas corresponds to a second chamber of a permeameter (11) which further comprises a first chamber (12) and a measurement device (16) for measuring the gas present in the second chamber, the first and second chambers being separated from each other by a barrier layer (10) having a permeation toward the gas, and wherein the measured gas flow $J_{mesure}$ is obtained from a measurement of the change over time of the partial pressure of the gas in the second chamber.

9. The method according to claim 8, wherein, during the implementation of the steps of measuring the gas flow $J_{mesure}$ and estimating the values of the parameters A and B, the barrier layer is saturated with gas, and wherein the measured gas flow $J_{mesure}$ corresponds to a pressure decrease of the gas in the second chamber of the permeameter.

10. The method according to claim 9, further including, after estimating the values of the parameters A and B, calculating a stabilized gas flow $J\infty$ such that $J\infty = A.B$ or, when an estimation of the values of the parameters $A_x$ and $B_x$ is implemented, calculating stabilized gas flows $J\infty_x$ such that $J\infty_X = A_X.B_X$.

11. A method for estimating a permeation of a barrier layer (10) relative to at least one gas (18), wherein the barrier layer (10) separates a first chamber (12) from a second chamber (14) of a permeameter (11), including at least:

- depressurizing the first chamber and the second chamber relative to the gas;
- firstly implementing a method for estimating a gas flow according to claim 8 such that the measured gas flow, designated $J_{mesure\_degas}$, corresponds to a pressure decrease of the gas in the second chamber;
- calculating an estimation of a gas flow $J_{estim\_degas}(t)$ from the last values of the parameters A and B previously estimated during the first implementation of the method for estimating a gas flow;
- introducing the gas into the first chamber such that the partial pressure of the gas in the first chamber is higher than that in the second chamber;
- secondly implementing a method for estimating a gas flow according to claim 9 such that the measured gas flow $J_{mesure}$, corresponds to a pressure rise of the gas in the second chamber, and during which the estimation of the values of the parameters A and B is performed by decreasing the estimation error based on a difference between an estimation of the gas flow $J_{estim\_perm}(t)$ and another gas flow $J_{mesure\_perm}$ such that $J_{mesure\_perm} =J_{mesure}-J_{estim\_degas}(t)$.

**12.** the method according to claim 11, wherein, when a global error between the measured gas flow $J_{mesure\_degas}$ and the estimation of the gas flow $J_{estim\_degas}(t)$ is lower than the value of a first threshold $Y_{degas\_inf}$, the estimation of the gas flow $J_{estim\_degas}(t)$ is subtracted from the values of the measured gas flow $J_{mesure}$ during the second implementation of the method for estimating the gas flow and, when the global error between the measured gas flow $J_{mesure\_degas}$ and the estimation $J_{estim\_degas}(t)$ is higher than the value of a second threshold $Y_{degas\_sup}$, a last measured value of the gas flow $J_{mesure\_degas}$ or an average of several last measured values of the gas flow $J_{mesure\_degas}$ is subtracted from the values of the measured gas flow $J_{mesure}$ during the second implementation of the method for estimating the gas flow.

**13.** The method according to one of claims 11 or 12, further including, after estimating the values of the parameters A and B during the second implementation of the method for estimating a gas flow, calculating a stabilized gas flow Joo such that $J\infty = A.B$ or, when an estimation of the values of the parameters $A_x$ and $B_x$ is implemented during the second implementation of a method for estimating a gas flow, calculating stabilized gas flows $J\infty_x$ such that $J\infty_X = A_X.B_X$.

**14.** A device (200) for estimating a permeation of a barrier layer (10), including means (202, 11) suitable for implementing a method for estimating the permeation of the barrier layer (10) according to one of claims 11 to 13.

## FIG. 1

## FIG. 6

FIG. 2

FIG. 3

FIG. 4

FIG. 5

FIG. 7

FIG. 8

FIG. 9

FIG. 10

FIG. 11

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7624621 B2

**Littérature non-brevet citée dans la description**

- A Method for Détermination of the Permeation Rate of Hydrogen Through Metal Membranes. *Journal of the Eletrochemical Society,* Novembre 1966, 1218-1222